# EUROPÄISCHE PATENTSCHRIFT

(11) **EP 4 497 046 B1**
(45) Veröffentlichungstag und Bekanntmachung des Hinweises auf die Patenterteilung: **06.05.2026**
(21) Anmeldenummer: 23711964.9
(22) Anmeldetag: 10.03.2023
(51) Int. Cl.: G05B 19/4068, G05B 19/4061

(54) **VERFAHREN ZUR KOLLISIONSPRÜFUNG EINES BEARBEITUNGSPROZESSES, MIT ERSATZWERKSTÜCK**
METHOD FOR CHECKING A MACHINING PROCESS FOR COLLISIONS, USING A REPLACEMENT WORKPIECE
PROCÉDÉ DE VÉRIFICATION D'UN PROCESSUS D'USINAGE POUR DES COLLISIONS AU MOYEN D'UNE PIÈCE DE REMPLACEMENT

(30) Priorität: 23.03.2022 CH 3182022
(43) Veröffentlichungstag der Anmeldung: 29.01.2025
(73) Patentinhaber: Reishauer AG, 8304 Wallisellen (CH)
(72) Erfinder: SENNHAUSER, Erwin, 8451 Kleinandelfingen (CH); FELLMANN, Oliver, 8122 Binz (CH); WINKLER, Lorenz, 8400 Winterthur (CH)
(74) Vertreter: Kohler Schmid Möbus Patentanwälte
(86) Internationale Anmeldenummer: PCT/EP2023/056251
(87) Internationale Veröffentlichungsnummer: WO 2023/180102

(56) Entgegenhaltungen:
- EP-A1- 2 306 253
- DE-A1- 10 208 990
- DE-A1- 102018 123 363
- DE-B3- 102016 104 318
- US-A1- 2015 045 941

## Beschreibung

Die Erfindung betrifft ein Verfahren zur Kollisionsprüfung eines Bearbeitungsprozesses,
wobei für den Bearbeitungsprozess ein prozessspezifischer Zyklus vorgesehen ist, während dessen mehrere Bearbeitungskomponenten relativ zueinander mit wenigstens einer Maschinenachse auf einer Werkzeugmaschine verfahren werden sollen, wobei die Bearbeitungskomponenten zumindest ein Werkstück und ein Werkzeug umfassen, und zumindest während eines Teils des prozessspezifischen Zyklus das Werkstück um eine Werkstückachse und das Werkzeug um eine Werkzeugachse rotieren sollen.

Ein solches Verfahren ist aus der EP 2 306 253 A1 bekannt geworden.

Bei der Fertigung von Zahnrädern, Getrieben und anderen Werkstücken kommen vielfältige Werkzeugmaschinen zum Einsatz, bei denen ein um eine Werkzeugachse rotierendes, insbesondere verzahntes Werkzeug in ein um eine Werkstückachse rotierendes, insbesondere verzahntes Werkstück eingreift. Das Werkzeug und das Werkstück und gegebenenfalls weitere Bearbeitungskomponenten an der Werkzeugmaschine müssen dafür in geeigneter Weise relativ zueinander verfahren werden, insbesondere für Zustellung und Vorschub. Ein Beispiel für eine solche Werkzeugmaschine kann der CH 715 794 B1 entnommen werden.

Im Rahmen eines solchen Bearbeitungsprozesses wird ein prozessspezifischer Zyklus durchlaufen, im Laufe dessen die beteiligten Bearbeitungskomponenten, umfassend zumindest das Werkstück und das Werkzeug, relativ zueinander mittels wenigstens einer Maschinenachse verfahren werden.

Bei der Neueinrichtung eines Bearbeitungsprozesses auf einer Werkzeugmaschine muss überprüft werden, ob ein geplanter prozessspezifischer Zyklus frei von unbeabsichtigten Kollisionen der Bearbeitungskomponenten ist ("Kollisionsprüfung"). Beispielsweise darf im prozessspezifischen Zyklus ein nicht der Bearbeitung dienender Teil des Werkzeugs oder eines Werkzeughalters des Werkzeugs nicht in Kontakt mit dem Werkstück oder einem Spannmittel des Werkstücks geraten.

In vielen Fällen wird eine Kollisionsprüfung mit den Mitteln der Werkzeugmaschine optisch durchgeführt. Die originalen Bearbeitungskomponenten werden auf der Werkzeugmaschine montiert, und gewünschte Positionen der Bearbeitungskomponenten werden vorsichtig, meist schrittweise, unter der Aufsicht und Kontrolle eines Bedieners angefahren, soweit möglich. Dabei nimmt der Bediener die Bearbeitungskomponenten immer wieder in Augenschein und schätzt ab, ob es zu einer unbeabsichtigten Kollision kommt. Nötigenfalls wird das Anfahren einer gewünschten Position abgebrochen.

Dieses Vorgehen ist oft schwierig. In vielen Fällen kann der Bediener die Bearbeitungskomponenten nur schlecht einsehen, selbst wenn er das Maschinengehäuse während der Kollisionsprüfung immer wieder bei abgeschalteter Werkzeugmaschine öffnet. Oftmals verdeckt das Werkstück andere Bearbeitungskomponenten, insbesondere wenn das Werkstück an einer radial innen liegenden Seite bearbeitet werden soll. Durch optische Hilfsmittel wie Spiegel oder Endoskope kann manchmal der Einblick für den Bediener verbessert werden, oftmals reicht aber der Platz für den Einsatz solcher Hilfsmittel nicht aus. Ein anderer Nachteil ist, dass der Bediener eine eigentlich zu überprüfende Position der Bearbeitungskomponenten aufgrund eines beginnenden gegenseitigen Eingriffs von Werkstück und Werkzeug während einer Kollisionsprüfung oft gar nicht anfahren kann. Der Bediener muss dann eine noch nicht erfolgte restliche Zustellung oder auch einen noch nicht erfolgten Vorschub in Gedanken zur eingestellten Position addieren und dann in Gedanken die Kollisionslage abschätzen. Falls der Bediener beim schrittweisen Anfahren einer gewünschten Position eine bevorstehende Kollision nicht erkennt, kann es während der Kollisionsprüfung zu einer Beschädigung der originalen Bearbeitungskomponenten kommen; insbesondere ist der Ersatz eines Werkzeugs im Falle einer Beschädigung meist sehr teuer.

Es ist auch bekannt, Kollisionsprüfungen geometrisch/mathematisch durchzuführen. Dafür werden die 3D-Daten aller beteiligter Bearbeitungskomponenten in ausreichender Exaktheit benötigt. Die 3D-Daten und der geplante prozessspezifische Zyklus werden in eine spezifische Software eingegeben. Die Software überprüft, ob es zu unerwünschten Kollisionen kommt. Der Aufwand für die Bereitstellung und gegebenenfalls Aktualisierung der 3D-Daten ist jedoch hoch, und die Software ist aufwändig zu programmieren bzw. Lizenzen für die entsprechende Software sind meist teuer. Ein Bespiel für eine mathematische Kollisionsüberprüfung beschreibt die EP 2 306 253 B1.

Zudem ist es auch aus der EP 2 849 014 A2 bekannt geworden, eine mathematische Kollisionsüberwachung während einer Verzahnungsbearbeitung auf einer Verzahnmaschine durchzuführen.

### Aufgabe der Erfindung

Es ist Aufgabe der Erfindung, ein einfaches, kostengünstiges und sicheres Verfahren zur Kollisionsprüfung eines Bearbeitungsprozesses bereitzustellen.

### Kurze Beschreibung der Erfindung

Diese Aufgabe wird erfindungsgemäß gelöst durch ein Verfahren der eingangs genannten Art, das vorsieht,
dass im prozessspezifischen Zyklus wenigstens eine Prüfungsposition identifiziert wird, die bezüglich der Bearbeitungskomponenten auf Kollisionen überprüft wird, wobei die Prüfungsposition einer mit der wenigstens einen Maschinenachse eingestellten Relativposition der Bearbeitungskomponenten entspricht,
und dass zur Überprüfung einer jeweiligen Prüfungsposition auf Kollisionen die Relativposition der Bearbeitungskomponenten nachgestellt wird,
wobei beim Nachstellen eine oder mehrere Ersatzbearbeitungskomponenten eingesetzt werden, die jeweils eine Nachbildung oder partielle Nachbildung der entsprechenden Bearbeitungskomponente sind,
wobei die eine oder die mehreren Ersatzbearbeitungskomponenten ein Ersatzwerkstück umfassen, das eine partielle Nachbildung des Werkstücks ist, wobei im Ersatzwerkstück das Werkstück zumindest über einen axialen Teilbereich lediglich über einen Teil eines Umfangs des Werkstücks nachgebildet ist,
und wobei in der nachgestellten Relativposition das Ersatzwerkstück um seine Werkstückachse gedreht wird.

Die Erfindung sieht vor, im prozessspezifischen Zyklus erkannte, für Kollisionen besonders anfällige Relativpositionen der Bearbeitungskomponenten ("Prüfpositionen") im Rahmen der Kollisionsprüfung nachzustellen. Dabei werden ein oder mehrere Ersatzbearbeitungskomponenten anstelle der originalen Bearbeitungskomponenten eingesetzt, darunter zumindest ein Ersatzbearbeitungswerkstück anstelle des originalen Werkstücks.

Durch den Einsatz von Ersatzbearbeitungskomponenten ist es zum einen möglich, im Rahmen der Kollisionsprüfung entsprechende originale Bearbeitungskomponenten oder auch mit den Ersatzbearbeitungskomponenten etwaig kollidierende Bauteile vor Beschädigungen zu schützen. Ersatzbearbeitungskomponenten werden grundsätzlich aus einem kostengünstigen und nachgiebigen Material (bevorzugt elastisch oder auch plastisch leicht verformbaren Material) gefertigt. Im Falle von Kollisionen während der Kollisionsprüfung werden nur die Ersatzbearbeitungskomponente oder die Ersatzbearbeitungskomponenten verformt, was keinen oder jedenfalls keinen bedeutsamen Schaden darstellt, aber es tritt keine Beschädigung an weiteren Bauteilen etwa der Werkzeugmaschine oder eines Modells der Werkzeugmaschine ein. Typische Materialien für Ersatzbearbeitungskomponenten sind Kunststoff, Blech (bevorzugt mit einer Blechdicke von ca. 2 mm, oder auch einer Blechdicke zwischen 1 mm und 3 mm) oder Pappe/Karton.

Zum anderen sieht die Erfindung vor, das Ersatzwerkstück nicht als vollständige Nachbildung des originalen Werkstücks auszubilden, sondern als partielle Nachbildung des originalen Werkstücks. Zumindest in einem axialen Teilbereich des Werkstücks wird dieses durch das Ersatzwerkstück nur über einen Teil des Umfangs nachgebildet. Mit anderen Worten wird in der Nachbildung zumindest in dem axialen Teilbereich ein Teil des Umfangs des Werkstücks weggelassen; typischerweise wird in der Nachbildung (zumindest in dem axialen Teilbereich) wenigstens 1/3 des Umfangs des Werkstücks im Ersatzwerkstück weggelassen.

Dadurch kann grundsätzlich ein besserer Einblick für einen Bediener auf die Bearbeitungskomponenten und Ersatzbearbeitungskomponenten ermöglicht werden, und etwaige Kollisionen können leichter erkannt werden. Insbesondere ist es möglich, im Falle von innenverzahnten Werkstücken das radial Innere des Werkstücks am Ersatzwerkstück einzusehen, was mit dem originalen Werkstück nicht möglich wäre. Durch Drehen des Ersatzwerkstücks (typischerweise per Hand durch einen Bediener) bleibt es aber möglich, über den vollen Umfang des Werkstücks (und insbesondere die im Ersatzwerkstück nicht nachgebildeten Teile des Umfangs des Werkstücks) mittels des Ersatzwerkstücks auf Kollisionen zu überprüfen.

Typischerweise wird auch eine Verzahnung des Werkstücks lediglich über einen Teil des Umfangs nachgebildet. In diesem Fall kann bei der Kollisionsprüfung das Werkzeug oder Ersatzwerkzeug seine vollständige Zustellung und seinen vollständigen Vorschub bei der Kollisionsprüfung relativ zum Ersatzwerkstück simulieren, indem das Ersatzwerkstück in eine Drehstellung gebracht wird, in der das Werkzeug oder Ersatzwerkzeug in einen nicht nachgebildeten Teil des Umfangs beim Ersatzwerkstück eingreift. Durch Drehen des Ersatzwerkstücks bis an das Werkzeug oder Ersatzwerkzeug heran kann dennoch leicht abgeschätzt werden, ob eine Kollision auftritt oder nicht. Man beachte, dass es alternativ oder zusätzlich auch möglich ist, Verzahnungen des Werkstücks zumindest lokal am Ersatzwerkstück durch eine Hüllkurve oder Hüllfläche nachzubilden, die dem Fußkreis der Verzahnung entspricht, was ebenfalls die Simulation einer vollständigen Zustellung und eines vollständigen Vorschubs ermöglicht. Im Allgemeinen sind das Werkzeug und das Werkstück drehsymmetrisch (mit einer Zähligkeitssymmetrie entsprechend der Zähnezahl ihrer Verzahnung).

Es kann vorgesehen sein, das Werkstück über seine gesamte axiale Erstreckung lediglich über einen Teil seines Umfangs mit dem Ersatzwerkstück nachzubilden, wodurch der Einblick des Bedieners optimiert werden kann. Es ist aber auch möglich, das Weglassen eines Teils des Umfangs in der Nachbildung auf einen axialen Teilbereich zu beschränken, der für einen guten Einblick besonders wichtig ist.

Man beachte, dass über das Ersatzwerkstück hinaus weitere Ersatzbearbeitungskomponenten ebenfalls zumindest über einen axialen Teilbereich lediglich über einen Teil ihres Umfangs oder auch über ihren gesamten Umfang die jeweils zugehörige Bearbeitungskomponente nachbilden können. Bevorzugt werden neben dem Werkstück auch ein Spannmittel für das Werkstück und/oder das Werkzeug mittels Ersatzbearbeitungskomponenten nachgebildet und beim Nachstellen der Prüfungspositionen eingesetzt.

Typische Bearbeitungskomponenten sind (neben dem Werkstück und dem Werkzeug) ein Spannmittel für das Werkstück, ein Werkzeughalter für das Werkzeug, werkstückspezifisches Tooling (auch Hilfswerkzeug genannt, insbesondere eine oder mehrere Gasdüsen zum Wegblasen von Spänen, eine oder mehrere Saugdüsen zum Absaugen von Spänen, eine oder mehrere KSS-Düsen zum Ausbringen von Kühlschmierstoff (KSS), ein oder mehrere Einzentriersensoren), eine Werkstückspindel oder eine Werkzeugspindel.

Im Falle von dreidimensionalen Ersatzbearbeitungskomponenten können diese beispielsweise durch 3D-Druck (meist aus Kunststoff) hergestellt werden; grundsätzlich kommen aber beliebige Herstellungsverfahren in Betracht. Zweidimensionale Ersatzbearbeitungskomponenten ("Schablonen") werden bevorzugt aus flächigem Material (beispielsweise Pappe oder Blech) herausgeschnitten, z.B. durch Laser- oder Wasserstrahlschneiden.

Typische Prüfungspositionen sind der Beginn bzw. das Ende des Eingriffs von Werkstück und Werkzeug bei der Bearbeitung oder Orte eines Richtungswechsels von Bearbeitungskomponenten sowie Bewegungsendpunkte von Bearbeitungskomponenten. Man beachte, dass im Rahmen des erfindungsgemäßen Verfahrens die Prüfungspositionen manuell, halbautomatisch oder auch automatisch angefahren werden können.

Die Werkzeugmaschine ist typischerweise eine Verzahnungsbearbeitungsmaschine, insbesondere eine Wälzschälmaschine, z.B. eine Hartwälzschälmaschine, oder eine Verzahnungsschleifmaschine, z.B. eine Wälzschleif- oder Profilschleifmaschine, oder eine Honmaschine oder eine Wälzfräsmaschine. Maschinenachsen, die im prozessspezifischen Zyklus eingesetzt werden, können insbesondere Linearachsen oder Drehachsen sein.

Kommt die Kollisionsprüfung zu dem Ergebnis, dass im vorgesehenen prozessspezifischen Zyklus keine unbeabsichtigten Kollisionen der Bearbeitungskomponenten stattfinden, kann der Bearbeitungsprozess an der Werkzeugmaschine aufgenommen werden (mit allen originalen Bearbeitungskomponenten). Ergibt die Kollisionsprüfung unbeabsichtigte Kollisionen der Bearbeitungskomponenten, so wird der vorgesehene prozessspezifische Zyklus abgeändert, um die Kollisionen zu vermeiden. In der Regel wird dann für den abgeänderten prozessspezifischen Zyklus nochmals eine Kollisionsprüfung durchgeführt, bevor der Bearbeitungsprozess aufgenommen wird.

### Bevorzugte Varianten der Erfindung

Bei einer vorteilhaften Variante des erfindungsgemäßen Verfahrens erfolgt das Nachstellen der Relativposition der Bearbeitungskomponenten auf einem von der Werkzeugmaschine separaten Modell der Werkzeugmaschine. Dadurch kann eine Kollisionsprüfung (beispielsweise für einen als nächsten einzurichtenden Bearbeitungsprozess) erfolgen, ohne die Produktion an der Werkzeugmaschine (gemäß einem bisherigen Bearbeitungsprozess) zu unterbrechen. Am Modell sind typischerweise die Maschinenachsen der Werkzeugmaschine ohne Motorisierung nachgebildet.

Bevorzugt ist eine alternative Variante, bei der das Nachstellen der Relativpositionen der Bearbeitungskomponenten auf der Werkzeugmaschine erfolgt. Der Aufwand für die Bereitstellung eines Modells der Werkzeugmaschine entfällt. Zudem können auf einfache Weise originale Bearbeitungskomponenten oder auch an der Werkzeugmaschine vorhandene, motorisierte Maschinenachsen bei der Kollisionsprüfung mit genutzt werden. Es können grundsätzlich alle Strukturen der Werkzeugmaschine bei der Kollisionsprüfung berücksichtigt werden, ohne dass eine Struktur vergessen wird. In dieser Variante werden die eine oder die mehreren Ersatzbearbeitungskomponenten an der Werkzeugmaschine befestigt, bevorzugt mittels Magneten und/oder Verschraubungen und/oder anderen Befestigungselementen. Übrige (nicht ersetzte) Bearbeitungskomponenten sind in der Werkzeugmaschine dauerhaft vorhanden oder sind im Original montiert.

Bevorzugt ist eine Weiterentwicklung dieser Variante, bei der die Werkzeugmaschine mindestens eine Werkstückspindel mit mindestens einem Spannmittel aufweist, und das Ersatzwerkstück für das Nachstellen mit dem Spannmittel montiert wird. Durch Nutzung des originalen Spannmittels an einer Werkstückspindel der Werkzeugmaschine ist die Befestigung des Ersatzwerkstücks für die Kollisionsprüfung besonders einfach. Falls die Werkzeugmaschine mehrere Werkstückspindeln aufweist, kann ein Ersatzwerkstück auf einer oder auch auf mehreren der Werkstückspindeln mit dem jeweiligen dortigen Spannmittel montiert werden.

Vorteilhaft ist eine Weiterentwicklung der obigen Variante, wobei für das Nachstellen das Ersatzwerkstück an einem Zwischenhalter befestigt wird, und der Zwischenhalter direkt oder indirekt an der Werkstückspindel befestigt wird, insbesondere wobei der Zwischenhalter mit einem Spannmittel der Werkstückspindel an der Werkstückspindel befestigt wird. Durch den Zwischenhalter wird die Befestigung des Ersatzwerkstücks auf der originalen Werkstückspindel vereinfacht. Das Ersatzwerkstück braucht nicht unmittelbar am originalen Spannmittel oder unmittelbar an der originalen Werkstückspindel befestigbar zu sein. Der Zwischenhalter kann als Befestigungsvermittler zwischen dem Ersatzwerkstück und der Werkstückspindel oder dem Spannmittel dienen, und einenends auf das Ersatzwerkstück und anderenends auf die Werkstückspindel bzw. das Spannmittel abgestimmt sein. Der Zwischenhalter kann für eine drehfeste Befestigung des Ersatzwerkstücks auf der Werkstückspindel ausgebildet sein (sodass die Drehbarkeit des Ersatzwerkstücks nur über die Werkstückspindel eingerichtet ist), oder der Zwischenhalter kann ein eigenes Drehlager ausbilden (wodurch der Zwischenhalter dann gleichzeitig als Behelfsdrehhalter dient, siehe dazu auch unten).

Bei einer bevorzugten Weiterentwicklung der obigen Variante wird für das Nachstellen das Ersatzwerkstück an einer Werkstückspindel der Werkzeugmaschine befestigt, und zum Drehen des Ersatzwerkstücks um seine Werkstückachse wird die Werkstückspindel der Werkzeugmaschine gedreht. Die Nutzung des Drehlagers der Werkstückspindel zum Drehen des Ersatzwerkstücks ist baulich besonders einfach. Die Drehung des Ersatzwerkstücks an der Werkstückspindel kann manuell oder auch (langsam, meist schrittweise) motorisiert erfolgen.

In einer vorteilhaften Variante ist vorgesehen, dass zum Nachstellen das Ersatzwerkstück an einem Behelfsdrehhalter montiert wird, und dass zum Drehen des Ersatzwerkstücks dieses auf dem Behelfsdrehhalter gedreht wird. Dadurch braucht die Werkstückspindel der Werkzeugmaschine bzw. deren Drehlager nicht zum Drehen des Ersatzwerkstücks eingesetzt zu werden, was manuell recht beschwerlich oder motorisiert bezüglich der Programmierung und betriebssicheren Ausführung recht zeitaufwändig sein kann. Der Behelfsdrehhalter bildet ein eigenes Drehlager zum Drehen des Ersatzwerkstücks aus. Das Drehlager des Behelfsdrehhalters kann insbesondere als Gleitlager oder als Wälzlager ausgebildet sein. Der Behelfsdrehhalter umfasst zwei gegeneinander drehbare Bauteile, wobei ein erstes Bauteil davon direkt oder indirekt das Ersatzwerkstück hält; das zweite Bauteil davon kann beispielsweise direkt oder indirekt an der originalen Werkstückspindel bzw. am originalen Spannmittel befestigt sein oder auch an einer entsprechenden Struktur eines Modells befestigt sein (das zweite Bauteil ist dann z.B. eine Gleitbasis oder ein Drehteller), oder das zweite Bauteil wird durch einen Teil der Außenkontur der originalen Werkstückspindel oder des originalen Spannmittels gebildet, auf welchem Teil der Außenkontur das erste Bauteil drehend gleiten kann. In einer Untervariante ist ein separates zweites Bauteil (beispielsweise ein "Ring"-Bauteil) einenends entsprechend der Spannkontur des Werkstücks ausgebildet, und anderenends entsprechend einem Teil der Außenkontur der Werkstückspindel nachgebildet, und das erste Bauteil ist für ein drehendes Gleiten auf diesem Teil der Außenkontur der Werkstückspindel ausgebildet; dann kann das erste Bauteil wahlweise mit dem separaten zweiten Bauteil (das auf dem originalen Spannmittel angeordnet wird) oder mit dem Teil der Außenkontur der originalen Werkstückspindel als zweitem Bauteil einen Behelfsdrehhalter ausbilden. Der Behelfsdrehalter wird typischerweise manuell gedreht. Der Behelfsdrehalter gehört grundsätzlich nicht zur Werkzeugmaschine. Es versteht sich, dass die Drehachse des Behelfsdrehhalters mit der Werkstückachse, wie sie durch die Werkstückspindel vorgegeben wird, koaxial ausgerichtet wird.

In einer bevorzugten Ausführungsform ist vorgesehen, dass das Ersatzwerkstück einen axialen Teilbereich aufweist, in welchem das Werkstück lediglich über einen Teil eines Umfangs des Werkstücks nachgebildet ist, und einen axialen Restbereich aufweist, in welchem das Werkstück über seinen vollen Umfang nachgebildet ist, insbesondere wobei in dem axialen Teilbereich der Teil des Umfangs mehrere in Umfangsrichtung voneinander separate Teilstrukturen aufweist. Mit dem Restbereich kann das Ersatzwerkstück wie das Werkstück befestigt werden, beispielsweise in einem originalen Spannmittel. Über die Eröffnung des Ersatzwerkstücks in dem axialen Teilbereich über einen Teil des Umfangs kann der Einblick des Bedieners verbessert werden, insbesondere im Falle eines innenverzahnten Werkstücks. Mit den separaten Teilstrukturen, beispielsweise zwei Teilstrukturen im Abstand von ca. 180° oder drei Teilstrukturen im Abstand von ca. 120°, kann ein besonders guter Einblick erfolgen. Gegebenenfalls können die Teilstrukturen auch beim Spannen des Ersatzwerkstücks (z.B. mit Backen- oder Schwenkklauenfuttern) mitwirken. Die Teilstrukturen erstrecken sich in Umfangsrichtung meist nur über einen kleinen Winkelbereich, meist 30° oder weniger, insbesondere 20° oder weniger.

Bevorzugt ist weiterhin eine Variante, bei der das Ersatzwerkstück als ein Teilwerkstück ausgebildet ist, welches das Werkstück zumindest in einem axialen Teilbereich über wenigstens 1/3 seines Umfangs und maximal 2/3 seines Umfangs nachbildet, insbesondere wobei das Teilwerkstück als Halbwerkstück ausgebildet ist. Mit einem solchen Teilwerkstück kann die Kollisionssituation besonders anschaulich für einen Bediener dargestellt und besonders einfach und schnell vom Bediener erfasst werden. Das Ersatzwerkstück braucht im Rahmen der Kollisionsprüfung in der Regel nur wenig gedreht zu werden. Im Teilwerkstück ist der nachgebildete Teil des Umfangs des Werkstücks typischerweise in Umfangsrichtung zusammenhängend.

Bevorzugt ist eine Variante, bei der das Ersatzwerkstück vom Werkstück lediglich eine Querschnittskontur ganz oder teilweise nachbildet. Dadurch wird die Herstellung des Ersatzwerkstücks besonders einfach. Der Querschnitt wird dabei in einer Ebene, die die Werkstückachse enthält, genommen.

Bei einer besonders bevorzugten Weiterentwicklung dieser Variante ist das Ersatzwerkstück durch eine zweidimensionale Schablone ausgebildet. Die Anfertigung einer zweidimensionalen Schablone ist besonders einfach und kostengünstig. Zudem wird für den Bediener ein besonders guter Einblick eröffnet. Die Schablone kann insbesondere als Halbschablone ausgebildet sein, die nur eine Hälfte der Querschnittskontur auf einer Seite der Werkstückachse (ganz oder teilweise) nachbildet. Ebenso kann die Schablone auch als Vollschablone ausgebildet sein, die beide Hälften der Querschnittskontur zu beiden Seiten der Werkstückachse (ganz oder teilweise) nachbildet. Die Schablone wird typischerweise mit einem Schablonenträger auf der Werkzeugmaschine (direkt oder indirekt auf der Werkstückspindel) oder auf dem Modell der Werkzeugmaschine befestigt.

Bei einer vorteilhaften Untervariante dieser Weiterentwicklung ist vorgesehen, dass die zweidimensionale Schablone als Mehrfachschablone ausgebildet ist, die an verschiedenen Abschnitten ihrer Randkontur die Querschnittskonturen von verschiedenen Werkstücken jeweils ganz oder teilweise nachbildet. Dadurch kann auf einfache und kostengünstige Weise eine Vielzahl von Werkstücken mit nur einer Schablone nachgebildet und auf Kollisionen überprüft werden. Durch Montage der Mehrfachschablone in einer bestimmten Orientierung kann ein bestimmter Abschnitt der Randkontur und damit ein bestimmtes Werkstück für die Kollisionsprüfung ausgewählt werden. Eine typische Mehrfachschablone ist mit zwei bis acht unterschiedlichen Abschnitten, jeweils entsprechend der Querschnittskontur eines anderen Werkstücks, ausgebildet.

Vorteilhaft ist zudem eine Untervariante der obigen Weiterentwicklung, bei der die zweidimensionale Schablone gegeneinander verstellbare Teilsegmente aufweist, die so eingestellt sind, dass sie die Querschnittskontur des Werkstücks und/oder eines Spannmittels ganz oder teilweise nachbilden. Mittels der verstellbaren Teilsegmente ist die zweidimensionale Schablone universell für praktisch beliebige Werkstücke und gegebenenfalls auch Spannmittel, deren jeweilige Querschnittskontur an den verstellbaren Teilsegmenten eingestellt wird, einsetzbar. Typischerweise haben die Teilsegmente einen Durchmesser oder eine größte Kantenlänge im Querschnitt senkrecht zu ihrer Erstreckungsrichtung von 2 mm oder weniger, meist 1 mm oder weniger.

Vorteilhaft ist zudem eine Weiterentwicklung der obigen Variante, bei der das Ersatzwerkstück die Querschnittskontur des Werkstücks und/oder eines Spannmittels durch Lichtstrahlen, insbesondere Laserstrahlen, ganz oder teilweise nachbildet. Durch Lichtstrahlen wird jegliches Beschädigungsrisiko ausgeschlossen, das während der Kollisionsprüfung auftreten könnte. Zudem sind mittels Lichtstrahlen Kollisionen oft besonders leicht für einen Bediener zu erkennen. In der Regel kann mittels eines Satzes von Lichtstrahlquellen (etwa Laserdioden an Magnethaltern) auch eine Vielzahl von Querschnittskonturen verschiedener Werkstücke und gegebenenfalls auch Spannmittel problemlos nachgebildet werden, so dass dieses Vorgehen universell genutzt werden kann. Die Lichtstrahlen weisen eine Wellenlänge oder ein Wellenlängenspektrum im sichtbaren Spektralbereich auf; die Lichtstrahlen werden bevorzugt mit einer für das menschliche Auge ungefährliche Intensität gewählt. Typischerweise werden wenigstens drei Lichtstrahlen gleichzeitig eingesetzt (z.B. wenigstens zwei Lichtstrahlen horizontal, wenigstens ein Lichtstrahl vertikal). Alternativ kann auch eine teilweise Nachbildung der Querschnittskontur mit Stäben, Schnüren oder Drähten anstelle von Lichtstrahlen erfolgen. Weiter alternativ ist es auch möglich, das Ersatzwerkstück durch Holographie zu erzeugen.

Bevorzugt ist eine Untervariante dieser Weiterentwicklung, die vorsieht, dass die Lichtstrahlen Kanten der Querschnittskontur des Werkstücks und/oder des Spannmittels nachbilden und/oder dass Kreuzungspunkte der Lichtstrahlen Eckpunkte in der Querschnittskontur des Werkstücks und/oder des Spannmittels nachbilden. Beispielsweise können horizontale Lichtstrahlen eine Werkstückoberkante und den Boden eines Sacklochs im Spannmittel nachstellen, und ein oder mehrere vertikale Lichtstrahlen einen Innendurchmesser des Werkstücks oder des Spannmittels nachstellen. Dieses Vorgehen hat sich zur Aufdeckung von Kollisionen in der Praxis bewährt. Wenn in einer einzelnen Konstellation der verfügbaren Lichtstrahlquellen nicht alle relevanten Kanten und Eckpunkte der Querschnittskontur auf Kollision überprüft werden können, können je (Prüfungs-)Relativposition auch mehrere Konstellationen von Lichtstrahlquellen nacheinander aufgebaut und auf Kollisionen geprüft werden.

Bei einer bevorzugten Variante umfassen die eine oder die mehreren Ersatzbearbeitungskomponenten ein Ersatzwerkzeug, das eine Nachbildung oder partielle Nachbildung des Werkzeugs ist. Dadurch kann eine Beschädigung des originalen Werkzeugs durch die Kollisionsprüfung vollständig ausgeschlossen werden. Zudem kann gegebenenfalls das originale Werkzeug während der Kollisionsprüfung noch anderweitig genutzt werden, oder braucht für die Kollisionsprüfung noch nicht hergestellt zu sein. Das Ersatzwerkzeug kann beispielsweise durch 3D-Druck gefertigt werden. Durch 3D-Druck können auch komplexe Werkzeuge mit vergleichsweise wenig Aufwand nachgebildet werden (insbesondere, wenn eine Verzahnung des Werkzeugs vollständig nachgebildet werden soll). Das Ersatzwerkzeug kann auch durch andere Verfahren als 3D-Druck gefertigt werden, beispielsweise durch Drehen und/oder Fräsen. Typischerweise werden Zähne des Werkzeugs bei der (partiellen) Nachbildung weggelassen oder durch Hüllkurven oder Hüllflächen ersetzt.

Bevorzugt ist eine Weiterentwicklung dieser Variante, die vorsieht, dass das Ersatzwerkzeug eine partielle Nachbildung des Werkzeugs ist, wobei im Ersatzwerkzeug das Werkzeug zumindest über einen axialen Teilbereich lediglich über einen Teil eines Umfangs des Werkzeugs nachgebildet ist, und dass in der nachgestellten Relativposition das Ersatzwerkzeug um seine Werkzeugachse gedreht wird. Dadurch kann wiederum der Einblick eines Bedieners auf die die Kollisionssituation verbessert werden. Durch Drehen des Ersatzwerkzeugs können auch diejenigen Teile des Umfangs des Werkzeugs, die im Ersatzwerkzeug nicht nachgebildet wurden, auf Kollisionen überprüft werden. Die partielle Nachbildung des Werkzeugs kann analog zur partiellen Nachbildung des Werkstücks erfolgen, insbesondere mittels einer zweidimensionalen Schablone.

Bevorzugt ist auch eine Weiterentwicklung, bei der die eine oder die mehreren Ersatzbearbeitungskomponenten einen Ersatzwerkzeughalter umfassen, der eine Nachbildung oder partielle Nachbildung eines Werkzeughalters ist, mit dem das Werkzeug an einer Werkzeugspindel der Werkzeugmaschine gehalten werden soll. Entsprechend ist auch der Werkzeughalter vor Beschädigungen während der Kollisionsprüfung vollständig geschützt, und gegebenenfalls kann auch bezüglich des Werkzeughalters der Einblick für den Bediener verbessert werden.

Vorteilhaft ist auch eine Variante, bei der die eine oder die mehreren Ersatzbearbeitungskomponenten ein Ersatzspannmittel umfassen, das eine Nachbildung oder partielle Nachbildung eines Spannmittels ist, mit dem das Werkstück an einer Werkstückspindel der Werkzeugmaschine gehalten werden soll. Dadurch ist es möglich, während der Kollisionsprüfung eine Beschädigung des Spannmittels oder durch das Spannmittel auszuschließen oder zu minimieren. Gegebenenfalls kann auch bezüglich des Spannmittels der Einblick für den Bediener verbessert werden.

In einer bevorzugten Weiterentwicklung dieser Variante wird das Ersatzspannmittel in der nachgestellten Relativposition zusammen mit dem Ersatzwerkstück gedreht, insbesondere wobei das Ersatzspannmittel und das Ersatzwerkstück durch eine gemeinsame zweidimensionale Schablone ausgebildet sind. Dies ist besonders einfach einzurichten. Das Ersatzspannmittel kann beispielsweise auf einem Behelfsdrehhalter oder auch auf der Werkstückspindel montiert sein.

Besonders bevorzugt ist eine Variante, die vorsieht, dass bei einer oder mehreren Ersatzbearbeitungskomponenten eine Verzahnung der entsprechenden Bearbeitungskomponente ganz oder teilweise durch eine Hüllkurve oder Hüllfläche der Verzahnung ersetzt wird. Dies vereinfacht die Herstellung der Ersatzbearbeitungskomponente deutlich. Die Hüllkurve oder Hüllfläche kann insbesondere an einem Kopfkreis oder Fußkreis der Verzahnung verlaufen. Durch Nachbildung am Kopfkreis kann die Kollision der Verzahnung mit (typischerweise nichtverzahnten) Strukturen anderer Bearbeitungskomponenten überprüft werden. Durch Nachbildung am Fußkreis kann gewährleistet werden, dass ein gegenseitiger Eingriff von zwei Verzahnungen das Nachstellen einer zugehörigen Prüfungs-position nicht blockiert.

Vorteilhaft ist weiterhin eine Variante, bei der die Bearbeitungskomponenten wenigstens ein Hilfswerkzeug umfassen, insbesondere wobei das wenigstens eine Hilfswerkzeug eine Gasdüsenanordnung und/oder eine Saugdüsenanordnung und/oder eine KSS-Düsenanordnung und/oder einen Einzentriersensor umfasst. Das oder die Hilfswerkzeuge werden auch als ergänzendes Tooling bezeichnet. Das wenigstens eine Hilfswerkzeug dient der Unterstützung der unmittelbaren Bearbeitung des Werkstücks durch das Werkzeug vor oder während der Bearbeitung; das Hilfswerkzeug selbst wird typischerweise nicht zur unmittelbaren Bearbeitung des Werkstücks eingesetzt. Beim Nachstellen der Relativposition der Bearbeitungskomponenten wird typischerweise das originale Hilfswerkzeug der Werkzeugmaschine verwendet; es ist aber auch möglich, Ersatz-Hilfswerkzeuge einzusetzen. Durch Berücksichtigung des Hilfswerkzeugs in der Kollisionsprüfung können auch unbeabsichtigte Kollisionen, an denen das Hilfswerkzeug beteiligt ist, aufgedeckt werden und so gegebenenfalls Schäden verhindert werden.

Bevorzugt ist eine Weiterentwicklung dieser Variante, die vorsieht, dass für wenigstens eine Prüfungsposition in der nachgestellten Relativposition eine funktionale Optimierung des wenigstens einen Hilfswerkzeugs erfolgt, insbesondere durch Positionierung, Ausrichtung und/oder Auswahl des Hilfswerkzeugs. Durch die nur teilweise Nachbildung des Werkstücks durch das Ersatzwerkstück und ggf. weiterer Bearbeitungskomponenten durch Ersatzbearbeitungskomponenten sind Hilfswerkzeuge gut einsehbar und gut zugänglich, so dass im Rahmen der Kollisionsprüfung die Optimierung der Hilfswerkzeuge, insbesondere deren Positionierung und Ausrichtung, besonders einfach erfolgen kann. Beispielsweise können Blasdüsen besonders genau auf den Ort des Entstehens von Spänen oder auf Orte einer etwaigen Ansammlung von Spänen gerichtet werden.

Besonders bevorzugt ist eine Variante, bei der das Werkstück, welches durch das Ersatzwerkstück partiell nachgebildet ist, ein innenverzahntes Werkstück ist. Bei einem innenverzahnten Werkstück ist es besonders schwierig, Kollisionen herkömmlich optisch zu überprüfen, da das Werkstück die zu bearbeitende Verzahnung und weitere innenliegende Strukturen praktisch vollständig verdeckt. Wird eine partielle Nachbildung des Werkstücks als Ersatzwerkstück gemäß der Erfindung verwendet, kann die Einsicht in das Werkstück deutlich verbessert werden, da das Ersatzwerkstück zumindest über einen Teil des Umfangs des Werkstücks geöffnet ist. Die Erfindung ist für innenverzahnte Werkstücke daher besonders nützlich. Alternativ kann die Erfindung auch beispielsweise für außenverzahnte Werkstücke oder stirnverzahnte Werkstücke eingesetzt werden. Allgemein kann ein Werkstück, das im Rahmen der Erfindung auf Kollisionen geprüft wird, eine oder mehrere Verzahnungen aufweisen.

Bevorzugt ist weiterhin eine Variante, bei der zur Kollisionsprüfung beim Drehen des Ersatzwerkstücks wenigstens ein Lichtspalt beobachtet wird. Zumindest einer der Lichtspalte kann zwischen dem Ersatzwerkstück und dem Werkzeug bzw. Ersatzwerkzeug verlaufen. Wenn der Lichtspalt verschwindet oder eine vorgegebene Größe unterschreitet, wird eine Kollision erkannt. Alternativ kann die Kollision anhand eines erhöhten Drehwiderstandes oder anhand einer Auslenkung erkannt werden, insbesondere des Ersatzwerkstücks und/oder des Werkzeugs bzw. Ersatzwerkzeugs.

Bevorzugt ist weiterhin eine Variante, die vorsieht, dass wenigstens eine Ersatzbearbeitungskomponente einen ersten Nachbildungsabschnitt und einen zweiten Nachbildungsabschnitt aufweist, wobei diese Nachbildungsabschnitte zwei gleichartig ausgebildete Abschnitte der entsprechenden Bearbeitungskomponente nachbilden, und wobei eine Art der Nachbildung im ersten Nachbildungsabschnitt und im zweiten Nachbildungsabschnitt unterschiedlich ist, insbesondere wobei die gleichartigen Abschnitte an der Bearbeitungskomponente eine Verzahnung tragen, und der erste Nachbildungsabschnitt einen Kopfkreis der Verzahnung nachbildet, und der zweite Nachbildungsabschnitt einen Fußkreis der Verzahnung nachbildet. Die unterschiedliche Art der Nachbildung kann insbesondere darin bestehen, in einer der Nachbildungen eine größte radiale und/oder axiale Erstreckung einer (in Umfangsrichtung periodischen) Struktur der gleichartigen Abschnitte nachzubilden, und in der anderen der Nachbildungen diese Struktur eine kleinste radiale und/oder axiale Erstreckung der (in Umfangsrichtung periodischen) Struktur nachzubilden. Mit dieser Variante ist es möglich, sowohl unmittelbare Kollisionen beispielsweise der Verzahnung aufzudecken (insbesondere mittels des ersten Nachbildungsabschnitts) als auch eine voll zugestellte/vorgeschobene Relativposition, bei der beispielsweise die Verzahnung in eine andere Verzahnung einer anderen Bearbeitungskomponente eingreift, nachzustellen. Die gleichartigen Abschnitte der Bearbeitungskomponente lassen sich durch Drehung (z.B. um die Werkstückachse im Falle eines Ersatzwerkstücks) ineinander überführen.

Vorteilhaft ist weiterhin eine Variante, bei der an wenigstens einer Ersatzbearbeitungskomponente wenigstens eine Grenzmarkierung angebracht ist, welche die Grenze einer an der Ersatzbearbeitungskomponente nicht oder nicht vollständig nachgebildeten Struktur der zugehörigen Bearbeitungskomponente anzeigt. Mit der Grenzmarkierung kann beispielswese der Anfang oder das Ende einer Verzahnung angezeigt werden, die an der Ersatzbearbeitungskomponente zumindest lokal nicht oder nicht vollständig nachgebildet ist. Die Grenzmarkierungen erlauben es einem Bediener, eine Kollision im Bereich nicht oder nicht vollständig nachgebildeter Strukturen leichter zu erkennen. Eine nicht oder nicht vollständig nachgebildete Struktur kann es ermöglichen, eine voll zugestellte und/oder voll vorgeschobene Relativposition von Ersatzbearbeitungskomponenten und Bearbeitungskomponenten einzustellen, die mit vollständig nachgebildeter Struktur nicht einstellbar wäre.

In einer vorteilhaften Variante ist vorgesehen, dass an wenigstens einer Ersatzbearbeitungskomponente eine Identifikationsmarkierung angebracht ist, die eine Identifikation der Ersatzbearbeitungskomponente und/oder eine Zuordnung der Ersatzbearbeitungskomponente zur entsprechenden Bearbeitungskomponente ermöglicht, insbesondere wobei die Identifikationsmarkierung für einen Menschen mit bloßem Auge lesbar und/oder maschinell lesbar ist, und insbesondere wobei die Identifikationsmarkierung einen alphanumerischen Code und/oder einen QR-Code und/oder einen Strichcode und/oder einen RFID-Tag umfasst. Dies vereinfacht die Handhabung der Werkzeugmaschine und ihrer Ersatzbearbeitungskomponenten und die Durchführung des erfindungsgemäßen Verfahrens, insbesondere auch in einem automatisierten Ablauf. Die Identifikationsmarkierung kann beispielsweise aufgedruckt oder aufgeklebt oder eingraviert sein.

In den Rahmen der vorliegenden Erfindung fällt auch ein Werkzeugmaschinensystem ausgebildet zur Durchführung eines oben beschriebenen, erfindungsgemäßen Verfahrens, das Werkzeugmaschinensystem umfassend eine Werkzeugmaschine zur Bearbeitung wenigstens eines Werkstücks sowie umfassend eine oder mehrere Ersatzbearbeitungskomponenten, die jeweils eine Nachbildung oder partielle Nachbildung einer entsprechenden Bearbeitungskomponente der Werkzeugmaschine sind, wobei die eine oder die mehreren Ersatzbearbeitungskomponenten ein Ersatzwerkstück umfassen, das eine partielle Nachbildung des Werkstücks ist, wobei im Ersatzwerkstück das Werkstück zumindest über einen axialen Teilbereich lediglich über einen Teil eines Umfangs des Werkstücks nachgebildet ist. Mit dem erfindungsgemäßen Werkzeugmaschinensystem kann auf einfache, kostengünstige und sichere Weise eine Kollisionsprüfung durchgeführt werden, insbesondere unter Anwendung eines oben beschriebenen, erfindungsgemäßen Verfahrens. Das Werkzeugmaschinensystem kann (neben dem Ersatzwerkstück) auch ein oder mehrere weitere Ersatzbearbeitungskomponenten umfassen, beispielsweise ein Ersatzwerkzeug, oder ein Ersatzspannmittel, oder einen Ersatzwerkzeughalter. Das Werkzeugmaschinensystem kann bezüglich einer oder mehrerer Bearbeitungskomponenten sowohl eine Original-Bearbeitungskomponente als auch eine Ersatzbearbeitungskomponente umfassen (beispielsweise ein Original-Spannmittel für das Werkstück und das zugehörige Ersatzspannmittel).

In einer bevorzugten Ausführungsform des erfindungsgemäßen Werkzeugmaschinensystems ist vorgesehen, dass die Werkzeugmaschine eine elektronische Maschinensteuerung umfasst, die dazu programmiert ist, zur Durchführung des oben beschriebenen, erfindungsgemäßen Verfahrens zu allen identifizierten Prüfungspositionen zugehörige Prüfungs-Relativpositionen der auf der Werkzeugmaschine angeordneten Ersatzbearbeitungskomponenten und/oder Bearbeitungskomponenten anzusteuern, insbesondere wobei die Prüfungs-Relativpositionen gleich den Relativpositionen der Bearbeitungskomponenten im prozessspezifischen Zyklus sind oder die Prüfungs-Relativpositionen den Relativpositionen der Bearbeitungskomponenten im prozessspezifischen Zyklus zuzüglich eines Offsets entsprechen, der durch eine Befestigung einer jeweiligen Ersatzbearbeitungskomponente auf der Werkzeugmaschine abweichend von einer Befestigung einer entsprechenden originalen Bearbeitungskomponente bedingt ist. Die Durchführung des erfindungsgemäßen Verfahrens zur Kollisionsprüfung ist dadurch auf der Werkzeugmaschine besonders einfach und komfortabel möglich.

In den Rahmen der vorliegenden Erfindung fällt zudem die Verwendung einer Ersatzbearbeitungskomponente in einem oben beschriebenen, erfindungsgemäßen Verfahren oder in einem oben beschriebenen, erfindungsgemäßen Werkzeugmaschinensystem, wobei die Ersatzbearbeitungskomponente eine Nachbildung oder partielle Nachbildung einer entsprechenden Bearbeitungskomponente ist, insbesondere wobei die Ersatzbearbeitungskomponente ein Ersatzwerkstück für ein entsprechendes Werkstück ist, wobei im Ersatzwerkstück das Werkstück zumindest über einen axialen Teilbereich lediglich über einen Teil eines Umfangs des Werkstücks nachgebildet ist. Durch diese Verwendung sind Kollisionsprüfungen auf einfache, kostengünstige und sichere Weise möglich.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt in schematischer Seitenansicht eine beispielhafte Ausführungsform eines erfindungsgemäßen Werkzeugmaschinensystems, zur Ausführung des erfindungsgemäßen Verfahrens zur Kollisionsprüfung, mit einem montierten Ersatzwerkstück, das als Halbwerkstück ausgebildet ist;
- Fig. 2: zeigt eine Vergrößerung aus Fig. 1 im Bereich des Ersatzwerkstücks;
- Fig. 3: zeigt in schematischer, perspektivischer Ansicht das Halbwerkstück von Fig. 1;
- Fig. 4: zeigt in schematischer, perspektivischer Ansicht ein beispielhaftes Ersatzwerkstück, das mit drei in Umfangsrichtung beabstandeten Teilstrukturen ausgebildet ist, für die Erfindung;
- Fig. 5: zeigt in schematischer, perspektivischer Ansicht ein originales Werkstück zu den Ersatzwerkstücken von Fig. 3 und Fig. 4;
- Fig. 6: zeigt in schematischer, perspektivischer Ansicht isoliert das Spannmittel aus Fig. 1 mit montiertem Ersatzwerkstück;
- Fig. 7: zeigt in schematischer, perspektivischer Ansicht isoliert den Ersatzwerkzeughalter mit montiertem Ersatzwerkzeug von Fig. **1****,** wobei eine Verzahnung des originalen Werkzeugs durch eine Hüllfläche nachgebildet ist;
- Fig. 8a: zeigt in schematischer, perspektivischer Ansicht einen beispielhaften Ersatzwerkzeughalter mit Ersatzwerkzeug, bei welchem eine Verzahnung des originalen Werkzeugs vollständig nachgebildet ist, für die Erfindung;
- Fig. 8b: zeigt in schematischer, perspektivischer Ansicht einen beispielhaften Ersatzwerkzeughalter mit Ersatzwerkzeug, welches als zweidimensionale Schablone ausgebildet ist, für die Erfindung;
- Fig. 9: zeigt in schematischer Perspektivansicht eine weitere, beispielhafte Ausführungsform eines erfindungsgemäßen Werkzeugmaschinensystems, zur Ausführung des erfindungsgemäßen Verfahrens zur Kollisionsprüfung, mit einer montierten zweidimensionalen Schablone, die ein Ersatzwerkstück und ein Ersatzspannmittel ausbildet;
- Fig. 10: zeigt eine Vergrößerung aus Fig. 9 im Bereich der zweidimensionalen Schablone;
- Fig. 11: zeigt eine vergrößerte seitliche Aufsicht auf die zweidimensionale Schablone von Fig. 9;
- Fig. 12: zeigt eine schematische, perspektivische Ansicht von schräg oben auf einen Schablonenhalter eines Zwischenhalters mit einer montierten Mehrfachschablone, für die Erfindung;
- Fig. 13: zeigt den Schablonenhalter und die Mehrfachschablone von Fig. 12 in einer schematischen, perspektivischen Ansicht von schräg unten;
- Fig. 14a: zeigt in einer schematischen Perspektivansicht von schräg oben einen beispielhaften Zwischenhalter, der als Behelfsdrehhalter mit einem Gleitlager ausgebildet ist, für die Erfindung;
- Fig. 14b: zeigt in einer schematischen Perspektivansicht von schräg unten den Zwischenhalter von Fig. 14a;
- Fig. 14c: zeigt in einem schematischen Querschnitt einen beispielhaften Zwischenhalter, der Behelfsdrehalter mit einem Wälzlager ausgebildet ist, für die Erfindung;
- Fig. 15: zeigt in einer schematischen Schnittansicht ein Ersatzwerkstück, das als zweidimensionale Schablone mit verstellbaren Teilsegmenten ausgebildet ist, für die Erfindung;
- Fig. 16: zeigt in schematischer Perspektivansicht einen Ausschnitt einer weiteren, beispielhaften Ausführungsform eines erfindungsgemäßen Werkzeugmaschinensystems, zur Ausführung des erfindungsgemäßen Verfahrens zur Kollisionsprüfung, mit einem Ersatzwerkstück, welches das originale Werkstück durch Lichtstrahlen teilweise nachbildet;
- Fig. 17: zeigt in einer schematischen Perspektivansicht ein Modell, das die Maschinenachsen einer Werkzeugmaschine nachbildet, zur Durchführung des erfindungsgemäßen Verfahrens zur Kollisionsprüfung in einer weiteren Variante.

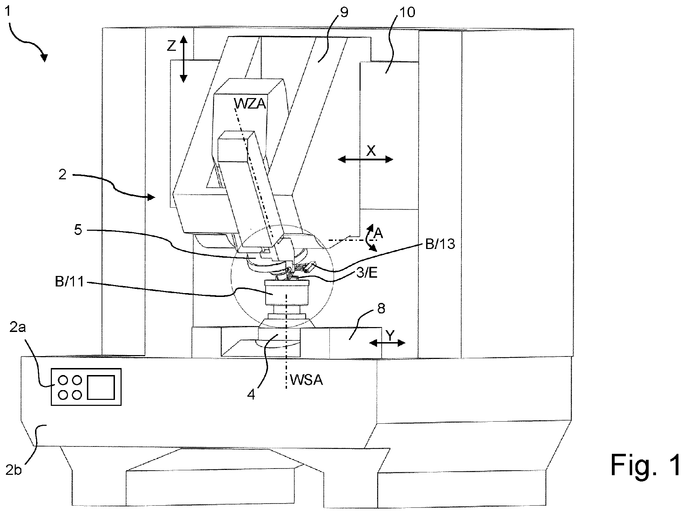

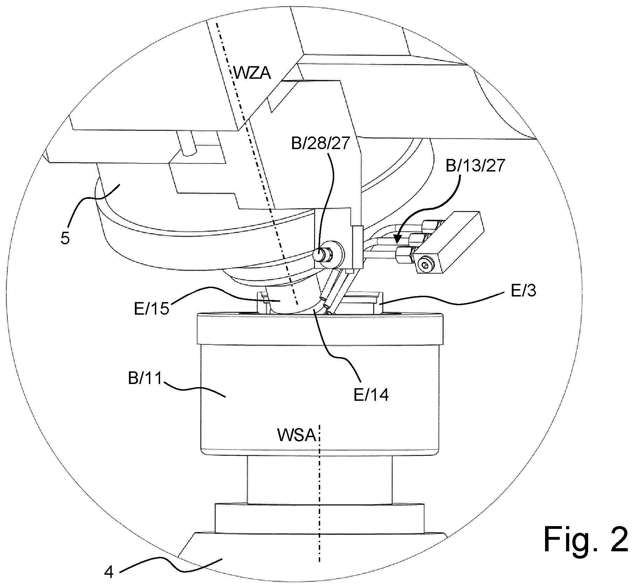

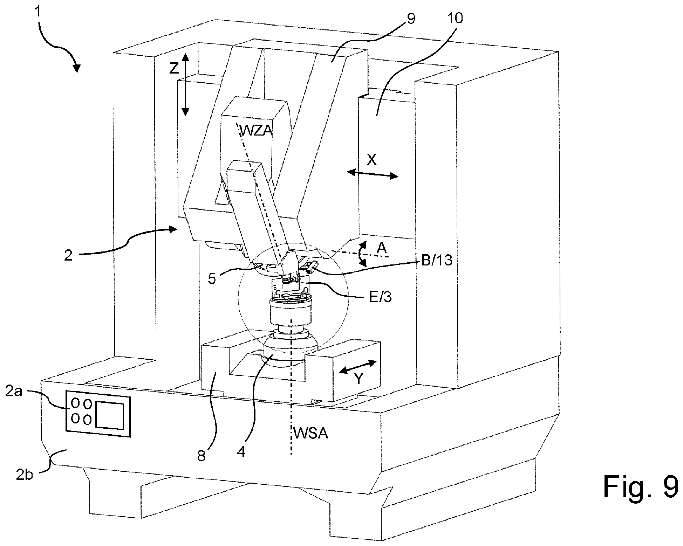

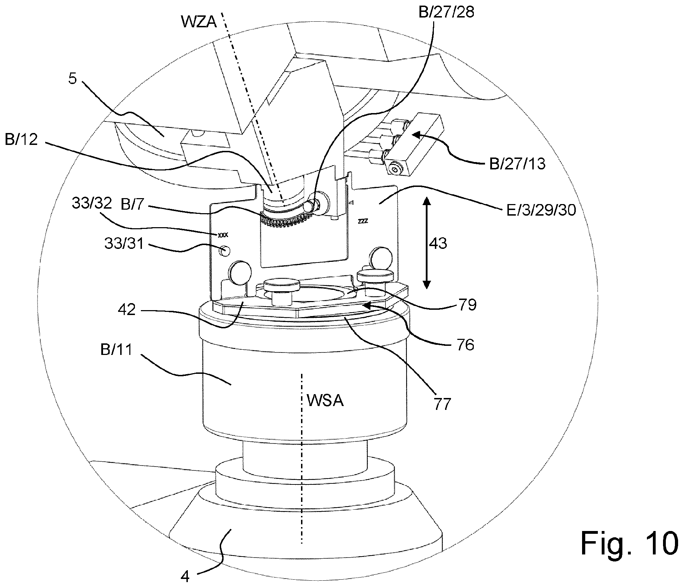

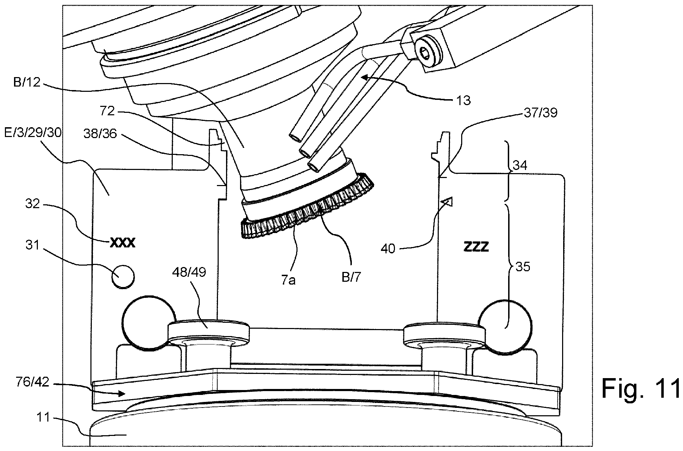

Die **Fig. 1** zeigt eine beispielhafte Ausführungsform eines erfindungsgemäßen Werkzeugmaschinensystems 1 in einer schematischen Seitenansicht, zur Ausführung des erfindungsgemäßen Verfahrens zur Kollisionsprüfung in einer beispielhaften Variante. Das Werkzeugmaschinensystem 1 weist eine Werkzeugmaschine 2 auf, an der ein Ersatzwerkstück 3 montiert ist. Die **Fig. 2** zeigt einen vergrößerten Ausschnitt von Fig. 1 im Bereich des Ersatzwerkstücks 3. Man beachte, dass die **Fig. 9** eine weitere, ähnliche Ausführungsform eines Werkzeugmaschinensystems 1 zeigt, und die allgemeinen Ausführungen zur Werkzeugmaschine 2 für beide Ausführungsformen gleichermaßen gelten. Die **Fig. 10** zeigt einen vergrößerten Ausschnitt der Fig. 9 im Bereich des dortigen Ersatzwerkstücks 3, und **Fig. 11** noch eine vergrößerte seitliche Aufsicht auf das Ersatzwerkstücks 3 von Fig. 9.

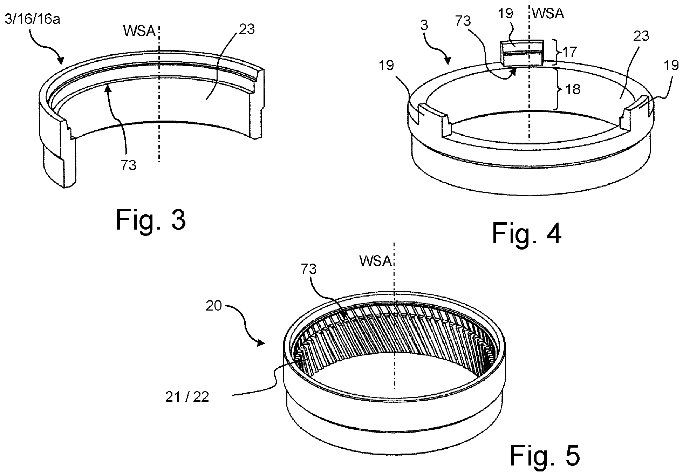

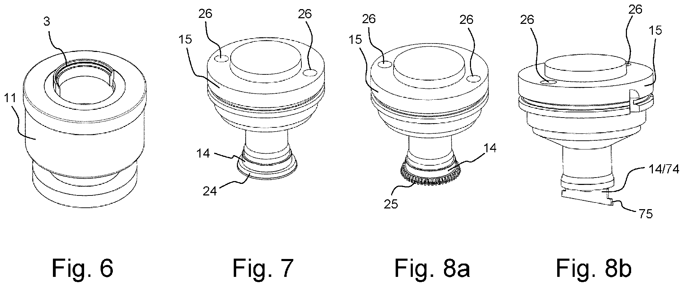

Auf der Werkzeugmaschine 2 ist ein Bearbeitungsprozess geplant, während dessen ein auf der Werkzeugmaschine 2 montiertes Werkstück (nicht dargestellt in Fig. 1/Fig. 2 und Fig. 9/Fig. 10/Fig. 11, vgl. aber Fig. 5, Bzz. 20 hierzu) einer Bearbeitung mit einem Werkzeug (nicht dargestellt in Fig. 1/Fig. 2, vgl. aber das in Fig. 7 dargestellte Ersatzwerkzeug 14 und das Werkzeug Bzz. 7 in Fig. 10) unterzogen werden soll, beispielsweise einem Hartwälzschälen. Das Werkstück wird dabei um eine Werkstückachse WSA einer Werkstückspindel 4 (C-Achse der Werkzeugmaschine 2) und das Werkzeug wird um eine Werkzeugachse WZA einer Werkzeugspindel 5 (B-Achse der Werkzeugmaschine) gedreht, und das Werkstück und das Werkzeug werden miteinander in Eingriff gebracht. Typischerweise sollen eine Vielzahl von Werkstücken nacheinander bearbeitet werden, so dass zunächst das Werkstück auf der Werkzeugmaschine montiert wird, bearbeitet wird, und demontiert wird, und sodann das nächste Werkstück montiert, bearbeitet und demontiert wird und so fort.

Im Laufe der Bearbeitung eines einzelnen Werkstücks werden Bearbeitungskomponenten B auf der Werkzeugmaschine 2 mittels Maschinenachsen in einem prozessspezifischen Zyklus relativ zueinander verfahren; der prozessspezifische Zyklus wiederholt sich bei jeder Bearbeitung eines neuen Werkstücks. Bearbeitungskomponenten B der Werkzeugmaschine 2 stellen dabei zumindest das Werkstück und das Werkzeug dar. Die Werkzeugmaschine 2 umfasst hier beispielhaft als Maschinenachsen, die im Rahmen eines prozessspezifischen Zyklus betätigt werden können:
- eine Maschinenachse Y, mit der ein Werkstückschlitten 8 hier in einer horizontalen Richtung gegenüber einem Maschinenbett 2b der Werkzeugmaschine 2 verfahren werden kann, wobei der Werkstückschlitten 8 die Werkstückspindel 4 trägt;
- eine Maschinenachse X, mit der ein Werkzeugschlitten 9 hier in einer horizontalen Richtung gegenüber einem Kreuzschlitten 10 verfahren werden kann, wobei der Werkzeugschlitten 9 die Werkzeugspindel 5 trägt;
- eine Maschinenachse Z, mit der ein Kreuzschlitten 10 hier in einer vertikalen Richtung gegenüber dem Maschinenbett 2b verfahren werden kann, wobei der Kreuzschlitten 10 den Werkzeugschlitten 9 trägt;
- eine Maschinenachse A, um welche die Werkzeugspindel 5 am Werkzeugschlitten 9 verschwenkt werden kann, wobei die Maschinenachse A hier horizontal (also parallel zu X) verläuft.

Die Maschinenachsen X, Y und Z sind hier orthogonal zueinander. Die Werkzeugmaschine 2 kann ausgebildet sein, und insbesondere eine Ausbildung von Maschinenachsen aufweisen, wie in der CH 715 794 B1 beschrieben. Der gesamte Inhalt der CH 715 794 B1 wird hiermit durch Bezugnahme in die vorliegende Offenbarung eingeschlossen.

Das Werkstück ist, wie am Ersatzwerkstück 3 ersichtlich, im gezeigten Beispiel als innenverzahntes Werkstück ausgewählt (vgl. auch Fig. 5 hierzu). Im Rahmen eines prozessspezifischen Zyklus könnte beispielsweise eine Betätigungsabfolge der Maschinenachsen X, Y, Z wie folgt mit den Schritten S1 bis S7 vorgesehen sein (wobei angenommen wird, dass sich das Werkstück zunächst an einer Werkstückwechselposition befindet und das Werkzeug zunächst in einer Position für den Werkstückwechsel ist, in welcher das Werkzeug in X- und in Z-Richtung von einer Grundposition abweicht):
- S1: Werkstückschlitten 8 über Y verfahren, um das Werkstück von der Werkstückwechselposition in die Bearbeitungsposition zu bringen;
- S2: Werkzeugschlitten 9 über X und Kreuzschlitten 10 über Z verfahren, um das Werkzeug in die Grundposition zu bringen;
- S3: ausgehend von der Grundposition des Werkzeugs den Kreuzschlitten 10 über Z nach unten fahren, so dass das Werkzeug am Werkstück eine Bearbeitung vornimmt (Vorschub);
- S4: Werkzeugschlitten 9 über X und bei Bedarf gekoppelt mit einer Bewegung des Werkstückschlittens 8 in Y einstellen, um Werkstück und Werkzeug außer Eingriff zu bringen;
- S5: Kreuzschlitten 10 über Z nach oben fahren, um das Werkzeug aus dem Werkstück herauszufahren;
- S6: Werkzeugschlitten 9 über X und soweit noch nicht in Schritt S4 geschehen Kreuzschlitten 10 über Z verfahren, bis das Werkzeug wieder in der Position für den Werkstückwechsel ist;
- S7: Werkstückschlitten 8 über Y verfahren, um das Werkstück wieder in die Werkstückwechselposition zu bringen.

Zwischen den Schritten S7 und S1 kann die Durchführung eines Werkstückwechsels erfolgen; hierfür kann beispielsweise ein nicht näher dargestellter Werkstückwechsel-Roboter eingesetzt werden. Zumindest während der Schritte S3 und S4 rotieren das Werkzeug und das Werkstück (Betätigung der B-Achse und der C-Achse, diese sind für die Kollisionsprüfung aber im Allgemeinen nicht relevant). In obigem Beispiel werden die Maschinenachsen X, Y, Z überwiegend oder durchgängig einzeln nacheinander betätigt, was oft bevorzugt ist; es ist aber auch möglich, zumindest zweitweise mehrere Maschinenachsen X, Y, Z gleichzeitig zu betätigen. Man beachte auch, dass die im zyklischen Prozess betätigten Maschinenachsen keine Linearachsen zu sein brauchen, und insbesondere auch Schwenkachsen umfassen können. Ferner können die Maschinenachsen redundante Achsen umfassen.

Bei der Planung eines prozessspezifischen Zyklus muss (vor der erstmaligen Durchführung des prozessspezifischen Zyklus im Rahmen einer tatsächlichen Werkstückbearbeitung) überprüft werden, ob der geplante Zyklus frei von unbeabsichtigten Kollisionen zwischen den beteiligten Bearbeitungskomponenten ist ("Kollisionsprüfung"). Falls ja, kann die Bearbeitung aufgenommen werden. Falls nein, muss der bisher geplante prozessspezifische Zyklus abgeändert werden. Die vorliegende Erfindung sieht für die Kollisionsprüfung dafür folgendes Vorgehen vor:
Zunächst werden im geplanten prozessspezifischen Zyklus eine oder mehrere Prüfungspositionen identifiziert (bestimmt); diese Identifikation kann von einer elektronischen Steuerungseinheit durchgeführt werden, die den geplanten prozessspezifischen Zyklus kennt. Eine Prüfungsposition beschreibt dabei jeweils die Relativposition (einschließlich der Orientierungen) der an dem Bearbeitungsprozess beteiligten Bearbeitungskomponenten; eine Prüfungsposition entspricht also einem Zeitpunkt im prozessspezifischen Zyklus. Die Prüfungspositionen werden grundsätzlich so festgelegt (insbesondere in Auswahl und Anzahl), dass im Falle einer Kollisionsfreiheit bei allen vorgesehenen Prüfungspositionen der prozessspezifische Zyklus insgesamt kollisionsfrei ist.

In vielen Fällen sind als Prüfungspositionen jeweils die Zeitpunkte im prozessspezifischen Zyklus gut geeignet, an denen die Betätigung einer Maschinenachse geendet hat und/oder die Betätigung der nächsten Maschinenachse beginnen wird ("Richtungswechsel"). Diese Prüfungspositionen können nötigenfalls um weitere Prüfungspositionen ergänzt werden, beispielsweise bei Relativpositionen der Bearbeitungskomponenten, an denen eine größte Nähe zweier Bearbeitungskomponenten erwartet wird (zum Beispiel, wenn zwei Bearbeitungskomponenten oder hervorstehende Teile davon bezüglich der Richtung einer Maschinenachse auf "gleicher Höhe" sind). In obigem Beispiel können beispielsweise die Prüfungspositionen jeweils an den Enden der Schritte S2-S4 festgelegt werden.

Sodann wird für jede vorgesehene Prüfungsposition die Relativposition der beteiligten Bearbeitungskomponenten nachgestellt. Dabei werden eine oder mehrere originale Bearbeitungskomponenten B im Rahmen der Erfindung durch Ersatzbearbeitungskomponenten E ersetzt, die eine Nachbildung oder partielle Nachbildung der zugehörigen originalen Bearbeitungskomponente B sind; zumindest wird das Werkstück durch ein Ersatzwerkstück 3 ersetzt. Das Ersatzwerkstück 3 bildet das Werkstück (zumindest in einem axialen Teilbereich) lediglich über einen Teil seines Umfangs nach; es wird also ein Teil des Umfangs weggelassen. Dadurch kann einem Bediener ein besserer Einblick auf die Kollisionssituation ermöglicht werden, insbesondere in das radial Innere des Ersatzwerkstücks 3. Durch Drehen des Ersatzwerkstücks 3 kann dennoch der volle Umfang des Ersatzwerkstücks 3 bzw. Werkstücks auf Kollisionen geprüft werden. Insbesondere kann beim Drehen der nachgebildete Teil des Umfangs in eine kollisionskritische Lage gebracht werden, ohne dass die zur kollisionskritischen Lage gehörende Drehposition vorab bekannt oder vorab eingestellt zu sein braucht.

In der in Fig. 1/Fig. 2 gezeigten Werkzeugmaschine 2 sind als Bearbeitungskomponenten B im Bearbeitungsprozess das Werkstück, ein Spannmittel **11** für das Werkstück, das Werkzeug, ein Werkzeughalter (vgl. Bzz. 12 in Fig. 9/Fig. 10/Fig. 11) für das Werkzeug, eine Gasdüsenanordnung 13 und ein Einzentriersensor 28 vorgesehen. Ein Teil der Bearbeitungskomponenten B wurde für die Kollisionsprüfung durch Ersatzbearbeitungskomponenten E ersetzt; im Werkzeugmaschinensystem **1,** das für die erfindungsgemäße Kollisionsprüfung eingesetzt wird, sind in der Ausführungsform der Fig. 1/Fig. 2 das Werkstück durch das Ersatzwerkstück 3, das Werkzeug durch ein Ersatzwerkzeug 14 und der Werkzeughalter durch einen Ersatzwerkzeughalter 15 ersetzt. Die Ersatzbearbeitungskomponenten E sind generell aus kostengünstigem und nachgiebigem Material gefertigt, so dass im Falle einer Kollision während der Kollisionsprüfung eine an der Kollision beteiligte (originale) Bearbeitungskomponente B nicht durch eine Ersatzkomponente E beschädigt wird.

In der in Fig. 1 gezeigten Ausführungsform werden die den Prüfungspositionen zugeordneten Relativpositionen direkt als Prüfungs-Relativpositionen mit der Werkzeugmaschine 2 angefahren, da die Ersatzbearbeitungskomponenten E hier in gleicher Weise an der Werkzeugmaschine 2 befestigt sind, wie es die entsprechenden originalen Bearbeitungskomponenten B wären. Eine elektronische Maschinensteuerung 2a ist programmiert, die Prüfungs-Relativpositionen nacheinander anzufahren; typischerweise gibt ein Bediener den Übergang zu einer nächsten Prüfungs-Relativposition manuell frei. An einer jeweiligen Prüfungs-Relativposition hält die Werkzeugmaschine 2 an, der Bediener öffnet eine Maschinenabdeckung (z.B. eine Fronttür) und der Bediener dreht typischerweise mit bloßer Hand das Ersatzwerkstück 3, in Fig. 1 mittels der Werkstückspindel 4 um die Werkstückachse WSA, um die Kollisionslage zu überprüfen. Wenn die Prüfungs-Relativposition überprüft worden ist, schließt der Bediener wieder die Maschinenabdeckung, und die nächste Prüfungs-Relativposition kann angefahren werden, und so fort.

In der gezeigten Ausführungsform von Fig. 1/Fig. 2 sind als Bearbeitungskomponenten B auch die Gasdüsenanordnung 13 und der Einzentriersensor 28 vorgesehen, die hier an einem Gehäuse der Werkzeugspindel 5 befestigt sind. Die Gasdüsenanordnung 13 und der Einzentriersensor 28 sind Beispiele für Hilfswerkzeuge 27, die die Bearbeitung des Werkstücks unterstützen, ohne selbst unmittelbar an der Bearbeitung teilzunehmen. Mit der Gasdüsenanordnung 13 können während der Bearbeitung Späne aus dem Eingriffsbereich von Werkstück und Werkzeug weggeblasen werden. Die Gasdüsenanordnung 13 wird im Rahmen der erfindungsgemäßen Kollisionsprüfung zum einen mit auf Kollisionen überprüft (insbesondere auf Kollisionen mit dem Werkstück/Ersatzwerkstück 3 oder dessen Spannmittel 11). Zum anderen kann die Positionierung und Ausrichtung der Gasdüsenanordnung 13 (insbesondere der im gezeigten Beispiel drei zugehörigen Gasaustrittsöffnungen) optimiert werden, zum Beispiel für die Prüfungsposition am Ende des Schrittes S2 und/oder S3 und/oder S4 in obigem Beispiel. Durch die nur teilweise Nachbildung des Werkstücks durch das Ersatzwerkstück 3 ist diese Optimierung für den Bediener besonders einfach möglich, sowohl bezüglich der Zugänglichkeit als auch der Einsehbarkeit der Gasdüsenanordnung 13 und deren Teile. Der Einzentriersensor 28 erfasst die Drehposition des Werkzeugs bezüglich der Werkzeugachse WZA, um die Synchronisation von Werkzeug und Werkstück einzurichten.

Das in der Ausführungsform von Fig. 1 eingesetzte Ersatzwerkstück 3 ist in **Fig. 3** isoliert dargestellt. Das Ersatzwerkstück 3 ist als ein Teilwerkstück 16a, und hier als Halbwerkstück 16 ausgebildet. Bei dem gezeigten Halbwerkstück 16 ist das zugehörige originale Werkstück (vgl. Fig. 5) über die Hälfte des Umfangs (also 180° Umfangswinkel) zusammenhängend nachgebildet; der Rest des Umfangs ist in der Nachbildung weggelassen. Das Ersatzwerkstück 3 von Fig. 3 bildet das originale Werkstück über seine volle axiale Höhe nach.

Zur Überprüfung einer Kollision kann das Halbwerkstück 16 um 180° oder mehr um die Werkstückachse WSA gedreht werden, so dass der gesamte Umfangswinkelbereich von 360° wenigstens einmal vom Halbwerkstück 16 eingenommen wurde.

Die **Fig.** 4 zeigt eine alternative Ausbildung eines Ersatzwerkstücks 3, welches das originale Ersatzwerkstück in einem (hier oberen) axialen Teilbereich 17 über einen Teil seines Umfangs nachbildet, nämlich lediglich durch drei in Umfangsrichtung separate Teilstrukturen 19. Die Teilstrukturen 19 sind hier identisch ausgebildet (Alternativ ist es auch möglich, an den Teilstrukturen 19 zwei oder noch mehr Nachbildungsabschnitte einzurichten, die gleichartige Abschnitte des Werkstücks auf unterschiedliche Arten nachbilden, nicht dargestellt, vgl. aber dazu Fig. 11). Die Teilstrukturen 19 sind um ca. 120° voneinander beabstandet. Die Umfangsbereiche zwischen den Teilstrukturen 19 werden (soweit sie in den oberen axialen Teilbereich 17 fallen) im Rahmen der Nachbildung im Ersatzwerkstück 3 weggelassen. In einem (hier unteren) axialen Restbereich 18 wird das originale Werkstück über den vollen Umfang nachgebildet. Der axiale Restbereich 18 erleichtert das Aufspannen des Ersatzwerkstücks 3 auf einem Spannmittel.

Zum Überprüfen einer Kollision kann das Ersatzwerkstück 3 um 120° oder mehr um die Werkstückachse WSA gedreht werden, so dass der gesamte Umfangswinkelbereich von 360° wenigstens einmal von einer Teilstruktur 19 eingenommen wurde.

Die **Fig.** 5 zeigt zum Vergleich das originale Werkstück 20, welches durch die Ersatzwerkstücke der Fig. 3 und Fig. 4 teilweise nachgebildet wurde. Es weist eine Verzahnung 21, nämlich eine Innenverzahnung 22 auf.

Die Verzahnung 21 wurde in den Ersatzwerkstücken 3 von Fig. 3 und Fig. 4 durch eine Hüllfläche 23 ersetzt, die hier den Kopfkreis der Verzahnung 21 nachbildet. Dadurch sind die Ersatzwerkstücke 3 leichter zu fertigen. Im Übrigen entsprechen die Abmessungen des jeweiligen Ersatzwerkstücks 3 den Abmessungen des originalen Werkstücks 20. Man beachte, dass die Verzahnung 21 im gezeigten Beispiel eine Stufe 73 aufweist, die auch an den Ersatzwerkstücken (vgl. Bzz. 3 in Fig. 3 und Fig. 4) zu erkennen ist.

Die **Fig.** 6 zeigt isoliert das Ersatzwerkstück 3 von Fig. 4 im in dem Spannmittel 11 eingespannten Zustand. Das Spannmittel 11 kann in der Werkstückspindel befestigt werden.

Die **Fig.** 7 zeigt isoliert das Ersatzwerkzeug 14 von Fig. 1/Fig. 2 im in dem Ersatzwerkzeughalter 15 befestigten Zustand. Der Ersatzwerkzeughalter 15 ist mit Magneten 26 versehen, mit denen eine Befestigung an der Werkzeugspindel auf einfache Weise erfolgen kann. Am Ersatzwerkzeug 14 wurde eine Verzahnung des originalen Werkzeugs durch eine Hüllfläche 24 ersetzt. Man beachte, dass das Ersatzwerkzeug 14 hier über den gesamten Umfang nachgebildet ist. Das Ersatzwerkzeug 14 kann beispielsweise durch Drehen gefertigt werden.

Die **Fig. 8a** zeigt eine alternative Ausbildung eines Ersatzwerkzeugs 14 und eines Ersatzwerkzeughalters 15 ähnlich der Ausbildung von Fig. 7. Jedoch ist hier am Ersatzwerkzeug 14 auch eine Verzahnung des originalen Werkzeugs am Ersatzwerkzeug 14 vollständig durch eine Verzahnung 25 (also Zahn für Zahn) nachgebildet. Das Ersatzwerkzeug 14 kann beispielsweise durch 3D-Druck aus Kunststoff gefertigt werden.

Die **Fig. 8b** zeigt eine weitere, alternative Ausbildung eines Ersatzwerkzeugs 14 und eines Ersatzwerkzeughalters 15 ähnlich der Ausbildung von Fig. 7. Jedoch ist hier das Ersatzwerkzeug 14 durch eine zweidimensionale Schablone 74 ausgebildet, und bildet entsprechend das originale Werkzeug nur bezüglich eines Teils seines Umfangs, nämlich im Bereich eines Querschnitts (der die Werkzeugachse enthält) nach. Die Verzahnung des originalen Werkzeugs ist am Ersatzwerkzeug 14 durch eine Hüllkurve 75 entsprechend der Querschnittskontor am Kopfkreis der Verzahnung ersetzt. Das Ersatzwerkzeug 14 kann beispielsweise aus einem Blech ausgeschnitten werden. Das Ersatzwerkzeug 14, das als zweidimensionale Schablone 74 ausgebildet ist, kann beispielsweise in einen Schlitz an der Unterseite des Ersatzwerkzeughalters 15 eingesteckt werden (nicht näher dargestellt). Bei der Kollisionsprüfung wird das Ersatzwerkzeug 14 um die Werkzeugachse gedreht, hier mittels des Drehlagers der Werkzeugspindel.

Die **Fig.** 9 zeigt eine weitere, beispielhafte Ausführungsform eines erfindungsgemäßen Werkzeugmaschinensystems 1 in einer schematischen Perspektivansicht, zur Ausführung des erfindungsgemäßen Verfahrens zur Kollisionsprüfung in einer weiteren beispielhaften Variante. **Fig. 10** zeigt eine Vergrößerung der Fig. 9 im Bereich des Ersatzwerkstücks 3, das hier als zweidimensionale Schablone 30 ausgebildet ist, und **Fig. 11** eine zusätzliche, vergrößerte Aufsicht auf die zweidimensionale Schablone 30 von der Seite. Das Werkzeugmaschinensystem 1 wurde großteils bereits oben bei Fig. 1/Fig. 2 vorgestellt, so dass hier nur die wesentlichen Unterschiede hierzu erläutert werden sollen.

In Fig. 9/Fig. 10/Fig. 11 sind im Werkzeugmaschinensystem 1, das für die erfindungsgemäße Kollisionsprüfung eingesetzt wird, das Werkstück und das Spannmittel für das Werkstück durch ein Ersatzwerkstück 3 und ein Ersatzspannmittel 29 ersetzt. Dabei werden das Ersatzwerkstück 3 und das Ersatzspannmittel 29 gemeinsam durch eine zweidimensionale Schablone 30 ausgebildet, die in ihrem oberen Teil 34 die Kontur des Werkstücks und in einem unteren Teil 35 die Kontur des Spannmittels jeweils teilweise nachbildet. Das Werkzeug 7 mit seiner Verzahnung 7a und der Werkzeughalter 12 sind hier originale Bearbeitungskomponenten B. Man beachte, dass alternativ auch das Werkzeug 7 und der Werkzeughalter 12 durch Ersatzbearbeitungskomponenten ersetzt werden können, falls gewünscht (hier nicht näher dargestellt, vgl. aber Fig. 7, Fig. 8a, Fig. 8b hierzu).

Durch die zweidimensionale Schablone 30 erfolgt lediglich die Nachbildung der Querschnittskontur des Werkstücks und des Spannmittels (in einem für die Kollisionsprüfung relevanten Teil). Dies ist sehr einfach und kostengünstig in der Fertigung, beispielsweise durch Ausstanzen oder Ausschneiden aus einer Kunststoffplatte, Pappplatte oder dünnem Blech. Zum anderen wird dadurch ein sehr guter Einblick auf die Kollisionssituation ermöglicht. Die zweidimensionale Schablone 30 ist hier eine Vollschablone, die die Querschnittskontur des Werkstücks zu beiden Seiten der Werkstückachse WSA nachbildet.

Die zweidimensionale Schablone 30 ist hier mit einem RFID-Tag 31 und mit einem alphanumerischen Code (Beschriftung) 32, der mit bloßem Auge lesbar ist, versehen. Der RFID-Tag 31 und der alphanumerische Code 32 sind Beispiele für Identifikationsmarkierungen 33, mit denen die Schablone 30 leicht identifiziert werden kann und insbesondere dem originalen Werkzeug und dem originalen Spannmittel leicht zugeordnet werden kann.

Wie aus Fig. 11 besonders gut ersichtlich ist, wird auf den beiden Seiten (Hälften) der zweidimensionalen Schablone 30 die Querschnittskontur des Werkstücks auf unterschiedliche Art nachgebildet. Auf der in Fig. 11 linken Seite wird in einem ersten Nachbildungsabschnitt 36 ein Abschnitt einer Verzahnung des Werkstücks durch eine Hüllkurve 38 nachgebildet, die einem Kopfkreis der Verzahnung entspricht. Auf der in Fig. 11 rechten Seite wird in einem zweiten Nachbildungsabschnitt 37 ein weiterer Abschnitt der Verzahnung des Werkstücks durch eine Hüllkurve 39 nachgebildet, die (über den größten, hier unteren Teil der axialen Erstreckung der Verzahnung) dem Fußkreis der Verzahnung entspricht. Besagter Abschnitt und weiterer Abschnitt des Werkstücks sind gleichartig ausgebildet (d.h. sie können durch Drehung des Werkstücks ineinander überführt werden, hier um 180°). Mittels des ersten Nachbildungsabschnitts 36 können Kollisionen mit Bearbeitungskomponenten oder Ersatzbearbeitungskomponenten in Prüfungspositionen überprüft werden, für die kein Eingriff in die Verzahnung des Werkstücks vorgesehen ist. Mit dem zweiten Nachbildungsabschnitt 37 ist es möglich, das Werkzeug 7 mit dessen Verzahnung 7a (oder in anderen Ausführungsformen ein Ersatzwerkzeug) bis an den Fußkreis der Verzahnung an das Ersatzwerkstück heranzuführen, d.h. den vollen Eingriff in die Verzahnung des Werkstücks zu simulieren. Durch Drehen der Schablone 30 um (nahezu) 360° können Kollisionen über den gesamten Umfang überprüft werden.

An der zweidimensionalen Schablone 30 ist im Bereich des zweiten Nachbildungsabschnitts 37 eine Grenzmarkierung 40 angebracht, durch die dem Bediener angezeigt wird, wo die nicht vollständig nachgebildete Verzahnung im Bereich des zweiten Nachbildungsabschnitts 37 enden würde. Dies vereinfacht es dem Bediener, Prüfungs-Relativpositionen zu verifizieren und danach mögliche Kollisionen zu erkennen, wenn er den zweiten Nachbildungsabschnitt benutzt.

In Fig. **11** ist auch ein typischer Lichtspalt 72 gut ersichtlich, welcher vom Bediener überprüft werden kann, um Kollisionen aufzudecken. In der Fig. **11** ist der eingezeichnete Lichtspalt 72 zwischen dem Werkzeughalter 12 und der (radial inneren) Kontur des Ersatzwerkstücks 3 gelegen. Da zwischen dem Ersatzwerkstück 3 und dem Werkzeughalter 12 in der gezeigten Relativposition der Bearbeitungskomponenten B und Ersatzbearbeitungskomponenten E noch ein ausreichender Lichtspalt 72 verbleibt, liegt keine Kollision vor. Würde es beim Drehen des Ersatzwerkstücks 3 bzw. der zweidimensionalen Schablone 30 zu einer Berührung zwischen dem Ersatzwerkstück 3 und dem Werkzeughalter 12 kommen (würde also der Lichtspalt 72 verschwinden), läge eine Kollision vor.

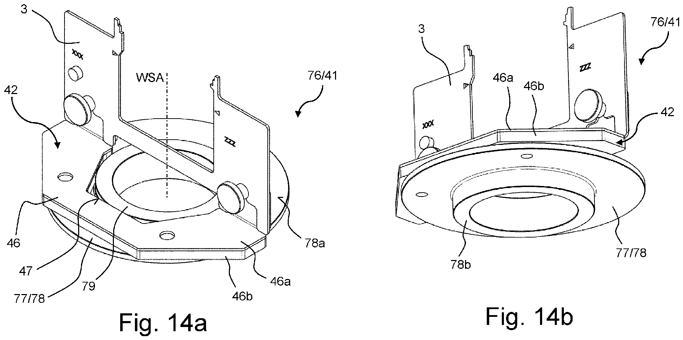

Die zweidimensionale Schablone 30 ist hier auf einem Zwischenhalter 76 befestigt, der wiederum auf dem originalen Spannmittel 11 der Werkzeugmaschine 2 angeordnet ist. Das originale Spannmittel 11 ist auf der Werkstückspindel 4 montiert. Man beachte, dass das originale Spannmittel 11 hier nicht bei der Kollisionsprüfung eingesetzt wird, sondern ein durch die zweidimensionale Schablone 30 mit ausgebildetes Ersatzspannmittel 29. Das Spannmittel 11 dient hier lediglich zur Lagerung (Befestigung) des Zwischenhalters 76. Der Zwischenhalter 76 umfasst hier einen Schablonenträger 42 und ein (in Fig. 10 größtenteils verdecktes) Unterteil 77, auf dem der Schablonenträger 42 mittels Befestigungselementen 48, unter anderem Rändelschrauben 49, drehfest fixiert ist. Am Schablonenträger 42 ist die zweidimensionale Schablone 30 fixiert, und das Unterteil 77 ist im (originalen) Spannmittel 11 fixiert. Zum Drehen des Ersatzwerkstücks 3 wird das Ersatzwerkstück 3 mitsamt Zwischenhalter 76 und Spannmittel 11 mittels der Werkstückspindel 4 bzw. deren Drehlager gedreht. Man beachte jedoch, dass durch Weglassen der Rändelschrauben 49 der Zwischenhalter 76 auch als Behelfsdrehhalter mit einem als Gleitlager ausgebildeten, eigenen Drehlager eingesetzt werden kann (siehe Fig. 14a/Fig. 14b dazu).

Allerdings stimmen durch diesen Aufbau die Position (in Z-Richtung) des Ersatzwerkstücks 3 und des Ersatzspannmittels 29 (bzw. der Schablone 30) bei der Kollisionsprüfung nicht mit der Position des Werkstücks und des originalen Spannmittels 11 während der eigentlichen Werkstückbearbeitung überein. Das Ersatzwerkstück 3 und das Ersatzspannmittel 29 sind um einen Offset 43 "zu hoch" über der Originalposition angeordnet.

In der in Fig. 9/Fig. 10/Fig. 11 gezeigten Ausführungsform werden die den Prüfungspositionen zugeordneten Relativpositionen als Prüfungs-Relativpositionen mit der Werkzeugmaschine 2 angefahren, die den Relativpositionen zuzüglich dieses Offset 43 entsprechen. Der Offset 43 kompensiert, dass das Ersatzwerkstück 3 und das Ersatzspannmittel 29 hier nicht in gleicher Weise an der Werkzeugmaschine 2 befestigt sind, wie es die entsprechenden originalen Bearbeitungskomponenten B wären. Die Maschinensteuerung 2a ist programmiert, die solchermaßen angepassten Prüfungs-Relativpositionen nacheinander anzufahren. Man beachte, dass der Offset 43 auf dem Ersatzwerkstück 3 in der Beschriftung 32 angegeben werden kann, oder auch im RFID-Tag 31 gespeichert werden kann, so dass der Bediener diesen Offset in der Maschinensteuerung eingeben kann oder die Maschinensteuerung den Wert des Offset 43 automatisiert auslesen und übernehmen kann.

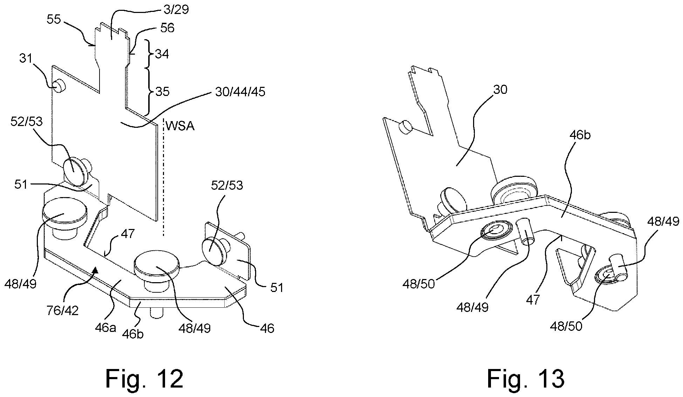

Die **Fig. 12** in Perspektivansicht von schräg oben und **Fig. 13** in Perspektivansicht von schräg unten erläutern nochmals den Aufbau des Schablonenträgers 42 des Zwischenhalters 76 von Fig. 9/Fig. 10/Fig. 11, wobei abweichend davon nun eine Mehrfachschablone 44, die als Halbschablone 45 ausgebildet ist, am Schablonenträger 42 gehalten ist.

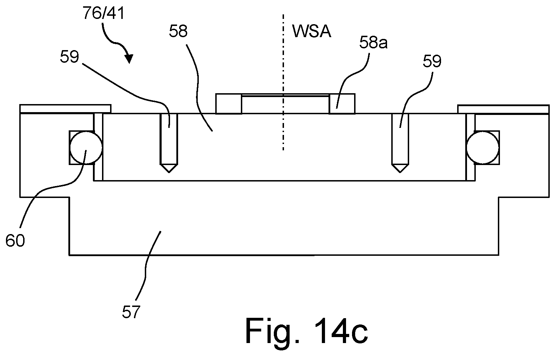

Der Schablonenträger 42 ist mit einer Grundplatte 46 ausgebildet, die nach innen (Richtung Werkstückachse WSA hin) mit einer Ausnehmung in Gestalt eines Positionier-Prismas 47 ausgebildet ist. An der Grundplatte 46 sind die Befestigungselemente 48 angeordnet, um den Schablonenträger 42 beispielsweise auf dem Unterteil (vgl. Fig. 10, Bzz. 77 hierzu) des Zwischenhalters oder auf einem Drehteller (vgl. Fig. 14c, Bzz. 58 hierzu) eines Behelfsdrehhalters, oder ggf. auch direkt an einer anderen Struktur wie einem Spannmittel oder einer Werkstückspindel zu befestigen. Als Befestigungselemente 48 sind hier beispielhaft Rändelschrauben 49 und Magnete 50 dargestellt. Die Grundplatte 46 umfasst hier eine Deckplatte 46a (typischerweise aus Metall gefertigt) und ein darunterliegendes Kunststoffprisma 46b.

Weiterhin weist der Schablonenträger 42 hier zwei Laschen 51 auf, an denen eine oder mehrere zweidimensionale Schablonen 30 befestigt werden können, wobei wiederum Rändelschrauben 52 als Befestigungselemente 53 für die Schablone oder Schablonen 30 benutzt werden können. Die Laschen 51 können wie dargestellt von der Deckplatte 46a hochgebogene Blechabschnitte sein, oder an der Grundplatte 46 befestigte, zusätzliche Strukturen sein (letzteres nicht näher dargestellt).

In der gezeigten Bauform ist die an dem Schablonenträger 42 befestigte zweidimensionale Schablone 30 als eine Mehrfachschablone 44 gewählt. Die Mehrfachschablone 44 ist hier als 2-fach-Schablone mit zwei verschiedenen Abschnitten 55, 56 ihrer Randkontur ausgebildet, wobei jeder dieser Abschnitte 55, 56 die Querschnittskontur eines anderen Werkstücks nachbildet. Je nachdem, in welcher Orientierung die Mehrfachschablone 44 am Schablonenträger 42 montiert ist, fungiert die Mehrfachschablone 44 als Ersatzwerkstück 3 für das eine oder das andere Werkstück. In der gezeigten Orientierung der Mehrfachschablone 44 wird der Abschnitt 56 für die Kollisionsprüfung genutzt, durch den in einem oberen Teil 34 die Querschnittskontur eines innenverzahnten Werkstücks teilweise nachgebildet wird. In einem unteren Teil 35 bildet der Abschnitt 56 auch teilweise ein Spannmittel nach, sodass die Mehrfachschablone 44 auch gleichzeitig als Ersatzspannmittel 29 fungiert. Würde die Schablone 30 in Fig. 12 in einer um 180° um eine vertikale Achse gedrehten Orientierung am Schablonenträger 42 montiert, so würde dann der Abschnitt 55 für die Kollisionsprüfung genutzt.

Da die Mehrfachschablone 44 den Querschnitt eines jeweiligen Werkstücks nur auf einer Seite (in Fig. 12 der linken Seite) nachbildet, wird die Mehrfachschablone 44 als Halbschablone 45 bezeichnet. Dadurch kann ein besonders guter Einblick in die Kollisionssituation gewonnen werden.

**Fig. 14a** und **Fig. 14b** illustrieren in Perspektivansichten eine Variante des Zwischenhalters von Fig. 9/Fig. 10/Fig. 11. In der Variante von Fig. 14a/Fig. 14b kann der Zwischenhalter 76 als Behelfsdrehhalter 41 genutzt werden. Der Schablonenträger 42 und das Unterteil 77 sind weitgehend wie in Fig. 9/Fig. 10/Fig. 11 und Fig. 12/Fig. 13 beschrieben ausgebildet, es werden nur die wesentlichen Unterschiede erläutert.

Der Behelfsdrehhalter 41 umfasst hier den Schablonenträger 42 und das Unterteil 77. Der Schablonenträger 42 wird jedoch hier nicht drehfest auf dem Unterteil 77 fixiert, sondern wird lediglich mit dem Positionierungs-Prisma 47 an eine Aufnahme 79 des Unterteils 77 angelegt. Die Aufnahme 79 bildet einen ringförmigen Vorsprung gegenüber einer oberseitigen, ebenen Gleitfläche 78a des Unterteils 77 aus, auf der der Schablonenträger 42 mit seinem Kunststoffprisma 46b aufliegt. Das Kunststoffprisma 46b kann auch als Gleitelement bezeichnet werden. Weiterhin kann das Unterteil 77 bei dieser Bauform auch als Gleitbasis 78 des Behelfsdrehhalters 41 oder auch aufgrund seines Gesamtaufbaus vereinfachend als Ring bezeichnet werden.

Während das Positionierungs-Prisma 47 an der Aufnahme 79 anliegt und dadurch den Schablonenträger 42 zentriert, kann der Schablonenträger 42 beliebig um die Werkstückachse WSA (die durch das Zentrum der Aufnahme 79 verläuft) von Hand gedreht werden, wobei der Schablonenträger 42 (bzw. das Kunststoffprisma) mit seiner Unterseite auf der Gleitfläche 78a gleitet. Eine Betätigung der Werkstückspindel ist dann für das Drehen des Ersatzwerkstücks 3 nicht nötig.

Das Unterteil 77 weist an seiner Unterseite einen ringförmigen Vorsprung 78b auf, mit dem das Unterteil 77 beispielsweise im originalen Spannmittel eingespannt werden kann. Das Unterteil 77 kann insbesondere aus Stahl gefertigt sein.

Die **Fig. 14c** illustriert beispielhaft im Querschnitt die wesentlichen Teile eines alternativen Zwischenhalters 76 für die Erfindung, der ebenfalls als Behelfsdrehhalter 41 genutzt werden kann, und der beispielsweise in der Ausführungsform des Werkzeugmaschinensystems vom Fig. 9/Fig. 10/Fig. 11 anstelle des dortigen Zwischenhalters eingesetzt werden könnte.

Der Behelfsdrehhalter 41 weist einen Fußteil 57 auf, der typischerweise in einem originalen Spannmittel (hier nicht dargestellt, vgl. aber z.B. Fig. 10 dortiges Bzz. 11) eingespannt werden kann. Im Fußteil 57 ist ein Drehteller 58 drehbar um eine Achse gelagert, die im Einsatz der Werkstückachse WSA entspricht; in der gezeigten Bauform wird dafür ein Kugellager 60 genutzt. Auf dem Drehteller 58 wird der Schablonenträger (hier nicht dargestellt, vgl. aber z.B. Fig. 12/Fig. 13 oder Fig. 9/Fig. 10/Fig. 11, dortiges Bzz. 42) befestigt. Der Drehteller 58 weist hier für die Befestigung des Schablonenträgers Gewindebohrungen 59 auf, in die Rändelschrauben (Bzz. 49 in Fig. 9/Fig. 10/ Fig. 11 oder Fig. 12/Fig. 13) eingeschraubt werden können. Der Drehteller 58 weist in der gezeigten Bauform einen hier kreiszylindrischen Zentriervorsprung 58a zur Anlage des Positionierungs-Prismas 47 des Schablonenträgers 42 auf.

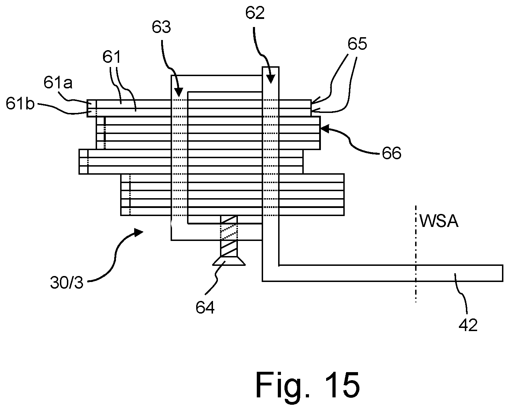

Die **Fig. 15** illustriert eine zweidimensionale Schablone 30 für die Erfindung in einer teilweise geschnittenen, schematischen Seitenansicht, wobei die Schablone 30 verstellbar ausgebildet ist und daher als Ersatzwerkstück 3 für eine Vielzahl von Werkstücken eingesetzt werden kann.

Die Schablone 30 ist mit einer Vielzahl von in axialer (in Fig. 15 vertikaler) Richtung übereinander angeordneten Teilsegmenten 61 ausgebildet, die in radialer (in Fig. 15 horizontaler) Richtung einzeln verstellt werden können. Die Teilsegmente 61 sind bevorzugt als im Querschnitt rechteckige, insbesondere quadratische, Stäbe ausgebildet. Die Teilsegmente 61 werden in einer inneren Führung (innerer Stabträger) 62 und einer äußeren Führung (äußerer Stabträger) 63 eines Schablonenträgers 42 geführt. Wenn ein Befestigungselement, hier eine Feststellschraube 64, gelöst ist, kann die Verstellung der Teilsegmente 61 erfolgen, wobei durch die Gesamtheit der Teilsegmente 61 (Stabpaket, Stabbündel) mit den inneren Enden 65 der Teilsegmente 61 die Querschnittskontur 66 des gewünschten Werkstücks näherungsweise nachgebildet wird. Sodann kann die Feststellschraube 64 gespannt werden, wodurch die Teilsegmente 61 in radialer Richtung festliegen. Der Schablonenträger 42 ist typischerweise Teil eines Behelfsdrehhalters (nicht näher dargestellt).

Die Teilsegmente 61 sind an ihren hinteren Enden jeweils mit einer Biegung 61a, 61b versehen, um ein Ergreifen der Teilsegmente 61 durch einen Bediener zu erleichtern; die Biegungen 61a, 61b weisen dabei bevorzugt abwechselnd in interschiedliche Richtungen. In Fig. 15 wechseln sich die Teilsegmente 61 mit einer Biegung 61a nach vorne (aus der Zeichenebene heraus) und Teilsegmente 61 mit einer Biegung 61b nach hinten (in die Zeichenebene hinein) ab.

In Fig. 15 sind in der seitlichen Aufsicht verdeckte Strukturen gepunktet angedeutet.

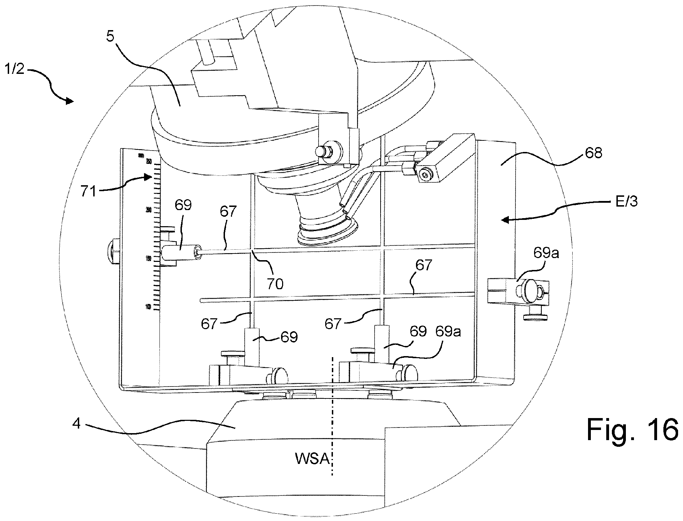

Die **Fig. 16** zeigt in einem Ausschnitt im Bereich des Ersatzwerkstücks 3 eine weitere, beispielhafte Ausführungsform eines erfindungsgemäßen Werkzeugmaschinensystems 1 in einer schematischen Seitenansicht, zur Ausführung des erfindungsgemäßen Verfahrens zur Kollisionsprüfung in einer weiteren beispielhaften Variante. Es werden nur die wesentlichen Unterschiede zur Bauform von Fig. 1/Fig. 2 erläutert.

Das Ersatzwerkstück 3 wird in der gezeigten Ausführungsform durch mehrere Lichtstrahlen 67 ausgebildet, die die Querschnittskontur des Werkstücks teilweise nachbilden. Die Lichtstrahlen 67 und deren Kreuzungspunkte 70 markieren dabei Kanten und Ecken der Querschnittskontur des Werkstücks. Die Lichtstrahlen 67 sind hier Laserstrahlen, die von Lichtstrahlquellen 69 (beispielsweise handelsüblichen Laserpointern) erzeugt werden. Die Lichtstrahlquellen 69 sind mittels Quellenträgern 69a an einem hier bügelartigen Trägerelement 68 montiert. Durch Drehen des Ersatzwerkstücks 3 bzw. des Trägerelements 68 um die Werkstückachse WSA kann die Kollisionssituation über den gesamten Umfang des Werkstücks bei sehr guter Einsehbarkeit für einen Bediener geprüft werden. Durch die Lichtstrahlen 67 werden kollidierende Kanten durch Lichtreflexe bzw. Unterbrechung der Lichtstrahlen 67 (die in ihrem Verlauf durch etwas Nebel oder Rauch mittels des Tyndall-Effekts gut sichtbar gemacht werden können) in der Regel auch besonders leicht erkannt.

Das Trägerelement 68 kann Teil eines Behelfsdrehhalters sein (wobei das Trägerelement 68 beispielsweise auf einem Drehteller des Behelfsdrehhalters montiert wird), oder auch direkt auf einer originalen Struktur (etwa wie hier auf der Werkstückspindel 4) montiert werden.

Am Trägerelement 68 ist hier eine Linear-Skala 71 als Einstellhilfe für die Einstellung der Lichtstrahlquellen 69 angebracht.

Durch die Lichtstrahlen 67 wird jegliche Beschädigung von mit den Lichtstrahlen 67 kollidierenden originalen Bearbeitungskomponenten (beispielsweise des Werkzeugs) zuverlässig ausgeschlossen.

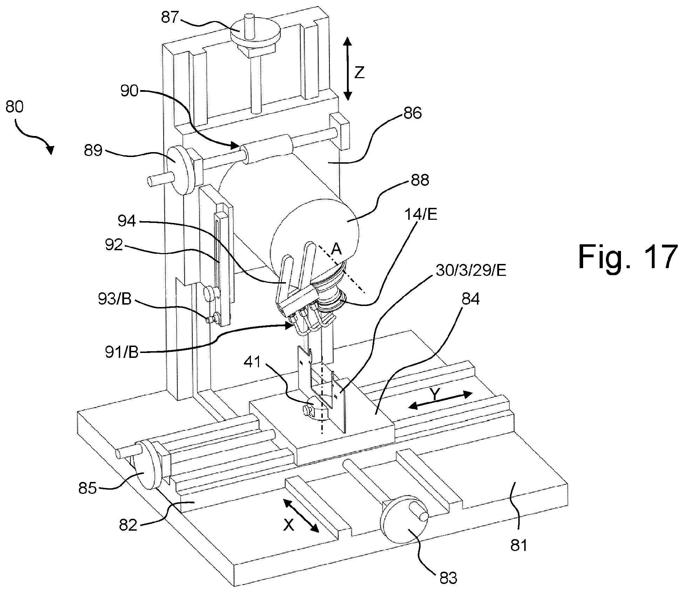

Die **Fig. 17** zeigt in einer schematischen Perspektivansicht ein Modell 80, mit dem die Prüfungspositionen bzw. Prüfungs-Relativpositionen für eine erfindungsgemäße Kollisionsprüfung nachgestellt werden können. Die originale Werkzeugmaschine, wie sie in Fig. 1 und Fig. 9 dargestellt ist, wird dann während der erfindungsgemäßen Kollisionsprüfung nicht benötigt, so dass Maschinenstillstandszeit vermieden wird. Das Modell 80 kann die Maschinenachsen der Werkzeugmaschine von Fig. 1 und Fig. 9 für die Kollisionsprüfung vollständig simulieren.

Das Modell 80 weist einen Tisch 81 auf, auf dem ein Zwischenschlitten 82 mit einer Handkurbel 83 bezüglich der simulierten Maschinenachse X verfahrbar ist. Auf dem Zwischenschlitten 82 ist ein Ersatzwerkstückschlitten 84 mit einer Handkurbel 85 entlang der simulierten Maschinenachse Y verfahrbar. Auf dem Ersatzwerkstückschlitten 84 ist mittels eines Behelfsdrehhalters 41 eine zweidimensionale Schablone 30 gehalten und um die simulierte Werkstückachse WSA drehbar. Die zweidimensionale Schablone 30 bildet hier das Ersatzwerkstück 3 und das Ersatzspannmittel 29 aus.

An einem Vertikalschlitten 86, der über eine Handkurbel 87 vertikal entlang der simulierten Maschinenachse Z verfahrbar ist, ist ein Modell-Werkzeugkopf 88 drehbar um die simulierte Maschinenachse A gelagert. Die simulierte Werkzeugachse A kann über die Handkurbel 89 mittels des Schwenkachsenantriebs 90 (der hier ein Schneckengetriebe umfasst, nicht näher dargestellt) betätigt werden. Am Modell-Werkzeugkopf 88 ist ein Ersatzwerkzeug 14 gehalten, das um die simulierte Maschinenachse A verschwenkt werden kann. Weiterhin ist am Modell-Werkzeugkopf 88 hier eine originale Gasdüsenanordnung 91 ausgebildet, die mit einer Verstelleinrichtung 94 verstellbar ist. Zudem ist am Vertikalschlitten 86 noch ein Verstellhalter 92 vorgesehen, an dem hier ein originaler Einzentriersensor 93 verstellbar ist. Alternativ ist es auch möglich, am Modell 80 eine Ersatzgasdüsenanordnung oder auch einen Ersatzeinzentriersensor vorzusehen (nicht näher dargestellt).

Die simulierten Maschinenachsen X, Y, Z, A sind mit nicht näher dargestellten Skalen versehen, mit denen ein Bediener die benötigten Prüfungs-Positionen bzw. Prüfungs-Relativpositionen einstellen kann, gegebenenfalls mit passendem Offset. An jeder Prüfungs-Position bzw. Prüfungs-Relativposition kann der Bediener sodann das Ersatzwerkstück 3 mittels des Behelfsdrehhalters 41 drehen, um die Ersatzbearbeitungskomponenten E (hier Bzz. 3, 29, 14) und die Bearbeitungskomponenten B (hier Bzz. 91, 93) auf Kollisionen zu prüfen.

Zusammenfassend betrifft die Erfindung ein Verfahren zur Kollisionsprüfung eines Bearbeitungsprozesses,
wobei für den Bearbeitungsprozess ein prozessspezifischer Zyklus vorgesehen ist, während dessen mehrere Bearbeitungskomponenten (B) relativ zueinander mit wenigstens einer Maschinenachse (A, X, Y, Z) auf einer Werkzeugmaschine (2) verfahren werden sollen, wobei die Bearbeitungskomponenten (B) zumindest ein Werkstück (20) und ein Werkzeug (7) umfassen, und zumindest während eines Teils des prozessspezifischen Zyklus das Werkstück (20) um eine Werkstückachse (WSA) und das Werkzeug (7) um eine Werkzeugachse (WZA) rotieren sollen, das dadurch gekennzeichnet ist,
dass im prozessspezifischen Zyklus wenigstens eine Prüfungsposition identifiziert wird, wobei die Prüfungsposition einer mit der wenigstens einen Maschinenachse (A, X, Y, Z) eingestellten Relativposition der Bearbeitungskomponenten (B) entspricht, und dass zur Überprüfung einer jeweiligen Prüfungsposition auf Kollisionen die Relativposition der Bearbeitungskomponenten (B) nachgestellt wird,
wobei beim Nachstellen eine oder mehrere Ersatzbearbeitungskomponenten (E) eingesetzt werden, die jeweils eine Nachbildung oder partielle Nachbildung der entsprechenden Bearbeitungskomponente (B) sind, und die ein Ersatzwerkstück (3) umfassen, das eine partielle Nachbildung des Werkstücks (20) ist, wobei im Ersatzwerkstück (3) das Werkstück (20) zumindest über einen axialen Teilbereich (17) lediglich über einen Teil eines Umfangs des Werkstücks (20) nachgebildet ist, und wobei in der nachgestellten Relativposition das Ersatzwerkstück (3) um seine Werkstückachse (WSA) gedreht wird. Die Erfindung stellt ein einfaches, kostengünstiges und sicheres Verfahren zur Kollisionsprüfung eines Bearbeitungsprozesses bereit.

### Bezugszeichenliste

- 1: Werkzeugmaschinensystem
- 2: Werkzeugmaschine
- 2a: Maschinensteuerung
- 2b: Maschinenbett
- 3: Ersatzwerkstück
- 4: Werkstückspindel
- 5: Werkzeugspindel
- 7: Werkzeug
- 7a: Verzahnung (Werkzeug)
- 8: Werkstückschlitten
- 9: Werkzeugschlitten
- 10: Kreuzschlitten
- 11: Spannmittel
- 12: Werkzeughalter
- 13: Gasdüsenanordnung
- 14: Ersatzwerkzeug
- 15: Ersatzwerkzeughalter
- 16: Halbwerkstück
- 16a: Teilwerkstück
- 17: axialer Teilbereich
- 18: axialer Restbereich
- 19: Teilstruktur
- 20: Werkstück
- 21: Verzahnung (Werkstück)
- 22: Innenverzahnung (Werkstück)
- 23: Hüllfläche (Ersatzwerkstück)
- 24: Hüllfläche (Ersatzwerkzeug)
- 25: Verzahnung (Ersatzwerkzeug)
- 26: Magnet
- 27: Hilfswerkzeug
- 28: Einzentriersensor
- 29: Ersatzspannmittel
- 30: zweidimensionale Schablone (Ersatzwerkstück)
- 31: RFID-Tag
- 32: alphanumerischer Code
- 33: Identifikationsmarkierung
- 34: oberer Teil
- 35: unterer Teil
- 36: erster Nachbildungsabschnitt
- 37: zweiter Nachbildungsabschnitt
- 38: Hüllkurve (Ersatzwerkstück)
- 39: Hüllkurve (Ersatzwerkstück)
- 40: Grenzmarkierung
- 41: Behelfsdrehhalter
- 42: Schablonenträger
- 43: Offset
- 44: Mehrfachschablone
- 45: Halbschablone
- 46: Grundplatte
- 46a: Deckplatte (oberer Teil der Grundplatte)
- 46b: Kunststoffprisma / Gleitelement (unterer Teil der Grundplatte)
- 47: Positionierungs-Prisma (Ausnehmung der Grundplatte)
- 48: Befestigungselement (für Schablonenträger)
- 49: Rändelschraube
- 50: Magnet
- 51: Lasche
- 52: Befestigungselement (für Schablone)
- 53: Rändelschraube
- 55: Abschnitt
- 56: Abschnitt
- 57: Fußteil
- 58: Drehteller
- 58a: Zentriervorsprung des Drehtellers
- 59: Gewindebohrung
- 60: Kugellager
- 61: Teilsegment
- 61a: Biegung (nach vorne)
- 61b: Biegung (nach hinten)
- 62: innere Führung
- 63: äußere Führung
- 64: Feststellschraube
- 65: inneres Ende
- 66: Querschnittskontur
- 67: Lichtstrahl
- 68: Trägerelement
- 69: Lichtstrahlquelle
- 69a: Quellenträger
- 70: Kreuzungspunkt
- 71: Linear-Skala
- 72: Lichtspalt
- 73: Stufe
- 74: zweidimensionale Schablone (Ersatzwerkzeug)
- 75: Hüllkurve (Ersatzwerkzeug)
- 76: Zwischenhalter
- 77: Unterteil
- 78: Gleitbasis / Ring
- 78a: Gleitfläche
- 78b: ringförmiger Vorsprung
- 79: Aufnahme
- 80: Modell
- 81: Tisch
- 82: Zwischenschlitten
- 83: Handkurbel
- 84: Ersatzwerkstückschlitten
- 85: Handkurbel
- 86: Vertikalschlitten
- 87: Handkurbel
- 88: Modell-Werkzeugkopf
- 89: Handkurbel
- 90: Schwenkachsenantrieb
- 91: Gasdüsenanordnung
- 92: Verstellhalter
- 93: Einzentriersensor
- 94: Verstelleinrichtung (Gasdüsenanordnung)
- A: Maschinenachse
- B: Bearbeitungskomponente
- E: Ersatzbearbeitungskomponente
- WSA: Werkstückachse
- WZA: Werkzeugachse
- X, Y, Z: Maschinenachsen

## Patentansprüche

1. Verfahren zur Kollisionsprüfung eines Bearbeitungsprozesses,
wobei für den Bearbeitungsprozess ein prozessspezifischer Zyklus vorgesehen ist, während dessen mehrere Bearbeitungskomponenten (B) relativ zueinander mit wenigstens einer Maschinenachse (A, X, Y, Z) auf einer Werkzeugmaschine (2) verfahren werden sollen, wobei die Bearbeitungskomponenten (B) zumindest ein Werkstück (20) und ein Werkzeug (7) umfassen, und zumindest während eines Teils des prozessspezifischen Zyklus das Werkstück (20) um eine Werkstückachse (WSA) und das Werkzeug (7) um eine Werkzeugachse (WZA) rotieren sollen,
**dadurch gekennzeichnet,**
**dass** im prozessspezifischen Zyklus wenigstens eine Prüfungsposition identifiziert wird, die bezüglich der Bearbeitungskomponenten (B) auf Kollisionen überprüft wird,
wobei die Prüfungsposition einer mit der wenigstens einen Maschinenachse (A, X, Y, Z) eingestellten Relativposition der Bearbeitungskomponenten (B) entspricht,
und **dass** zur Überprüfung einer jeweiligen Prüfungsposition auf Kollisionen die Relativposition der Bearbeitungskomponenten (B) nachgestellt wird, wobei beim Nachstellen eine oder mehrere Ersatzbearbeitungskomponenten (E) eingesetzt werden, die jeweils eine Nachbildung oder partielle Nachbildung der entsprechenden Bearbeitungskomponente (B) sind, wobei die eine oder die mehreren Ersatzbearbeitungskomponenten (E) ein Ersatzwerkstück (3) umfassen, das eine partielle Nachbildung des Werkstücks (20) ist, wobei im Ersatzwerkstück (3) das Werkstück (20) zumindest über einen axialen Teilbereich (17) lediglich über einen Teil eines Umfangs des Werkstücks (20) nachgebildet ist,
und wobei in der nachgestellten Relativposition das Ersatzwerkstück (3) um seine Werkstückachse (WSA) gedreht wird.

2. Verfahren nach Anspruch 1, **dadurch gekennzeichnet, dass** das Nachstellen der Relativposition der Bearbeitungskomponenten (B) auf einem von der Werkzeugmaschine (2) separaten Modell (80) der Werkzeugmaschine (2) erfolgt.

3. Verfahren nach Anspruch 1, **dadurch gekennzeichnet, dass** das Nachstellen der Relativpositionen der Bearbeitungskomponenten (B) auf der Werkzeugmaschine (2) erfolgt,
insbesondere wobei die Werkzeugmaschine (2) mindestens eine Werkstückspindel (4) mit mindestens einem Spannmittel (11) aufweist, und das Ersatzwerkstück (3) für das Nachstellen mit dem Spannmittel (11) montiert wird.

4. Verfahren nach Anspruch 3, **dadurch gekennzeichnet, dass** für das Nachstellen das Ersatzwerkstück (3) an einem Zwischenhalter (76) befestigt wird, und der Zwischenhalter (76) direkt oder indirekt an einer Werkstückspindel (4) befestigt wird.

5. Verfahren nach einem der Ansprüche 3 oder 4, **dadurch gekennzeichnet, dass** für das Nachstellen das Ersatzwerkstück (3) an einer Werkstückspindel (4) der Werkzeugmaschine (2) befestigt wird, und zum Drehen des Ersatzwerkstücks (3) um seine Werkstückachse (WSA) die Werkstückspindel (4) der Werkzeugmaschine (2) gedreht wird.

6. Verfahren nach einem der Ansprüche 1 bis 4, **dadurch gekennzeichnet, dass** zum Nachstellen das Ersatzwerkstück (3) an einem Behelfsdrehhalter (41) montiert wird, und dass zum Drehen des Ersatzwerkstücks (3) dieses auf dem Behelfsdrehhalter (41) gedreht wird.

7. Verfahren nach einem der Ansprüche 1 bis 6, **dadurch gekennzeichnet, dass** das Ersatzwerkstück (3) vom Werkstück (20) lediglich eine Querschnittskontur (66) ganz oder teilweise nachbildet.

8. Verfahren nach Anspruch 7, **dadurch gekennzeichnet, dass** das Ersatzwerkstück (3) durch eine zweidimensionale Schablone (30) ausgebildet ist.

9. Verfahren nach Anspruch 8, **dadurch gekennzeichnet,**
**dass** die zweidimensionale Schablone (30) als Mehrfachschablone (44) ausgebildet ist, die an verschiedenen Abschnitten (55, 56) ihrer Randkontur die Querschnittskonturen (66) von verschiedenen Werkstücken (20) jeweils ganz oder teilweise nachbildet,
oder
**dass** die zweidimensionale Schablone (30) gegeneinander verstellbare Teilsegmente (61) aufweist, die so eingestellt sind, dass sie die Querschnittskontur (66) des Werkstücks (20) und/oder eines Spannmittels ganz oder teilweise nachbilden.

10. Verfahren nach Anspruch 7, **dadurch gekennzeichnet, dass** das Ersatzwerkstück die Querschnittskontur (66) des Werkstücks und/oder eines Spannmittels durch Lichtstrahlen (67), insbesondere Laserstrahlen, ganz oder teilweise nachbildet,
insbesondere wobei die Lichtstrahlen (67) Kanten der Querschnittskontur (66) des Werkstücks und/oder des Spannmittels nachbilden und/oder dass Kreuzungspunkte (70) der Lichtstrahlen (67) Eckpunkte in der Querschnittskontur (66) des Werkstücks (20) und/oder des Spannmittels nachbilden.

11. Verfahren nach einem der vorhergehenden Ansprüche, **dadurch gekennzeichnet,**
**dass** die eine oder die mehreren Ersatzbearbeitungskomponenten (E) ein Ersatzwerkzeug (14) umfassen, das eine Nachbildung oder partielle Nachbildung des Werkzeugs (7) ist.

12. Verfahren nach Anspruch **11, dadurch gekennzeichnet,**
**dass** das Ersatzwerkzeug (14) eine partielle Nachbildung des Werkzeugs (7) ist, wobei im Ersatzwerkzeug (14) das Werkzeug (7) zumindest über einen axialen Teilbereich lediglich über einen Teil eines Umfangs des Werkzeugs (7) nachgebildet ist,
und **dass** in der nachgestellten Relativposition das Ersatzwerkzeug (14) um seine Werkzeugachse (WZA) gedreht wird.

13. Verfahren nach Anspruch **11** oder 12, **dadurch gekennzeichnet, dass** die eine oder die mehreren Ersatzbearbeitungskomponenten (E) einen Ersatzwerkzeughalter (15) umfassen, der eine Nachbildung oder partielle Nachbildung eines Werkzeughalters (12) ist, mit dem das Werkzeug (7) an einer Werkzeugspindel (5) der Werkzeugmaschine (2) gehalten werden soll.

14. Verfahren nach einem der vorhergehenden Ansprüche, **dadurch gekennzeichnet, dass** die eine oder die mehreren Ersatzbearbeitungskomponenten (E) ein Ersatzspannmittel (29) umfassen, das eine Nachbildung oder partielle Nachbildung eines Spannmittels (11) ist, mit dem das Werkstück (20) an einer Werkstückspindel (4) der Werkzeugmaschine (2) gehalten werden soll,
insbesondere wobei das Ersatzspannmittel (29) in der nachgestellten Relativposition zusammen mit dem Ersatzwerkstück (3) gedreht wird,
und insbesondere wobei das Ersatzspannmittel (29) und das Ersatzwerkstück (3) durch eine gemeinsame zweidimensionale Schablone (30) ausgebildet sind.

15. Verfahren nach einem der vorhergehenden Ansprüche, **dadurch gekennzeichnet, dass** bei einer oder mehreren Ersatzbearbeitungskomponenten (E) eine Verzahnung (7a; 21) der entsprechenden Bearbeitungskomponente (B) ganz oder teilweise durch eine Hüllkurve (38, 39; 75) oder Hüllfläche (23, 24) der Verzahnung (7a; 21) ersetzt wird.

16. Verfahren nach einem der vorhergehenden Ansprüche, **dadurch gekennzeichnet,**
**dass** die eine oder die mehreren Ersatzbearbeitungskomponenten (E) wenigstens eine Ersatzbearbeitungskomponente (E) umfassen, die einen ersten Nachbildungsabschnitt (36) und einen zweiten Nachbildungsabschnitt (37) aufweist, wobei diese Nachbildungsabschnitte (36, 37) zwei gleichartig ausgebildete Abschnitte der entsprechenden Bearbeitungskomponente (B) nachbilden, und wobei eine Art der Nachbildung im ersten Nachbildungsabschnitt (36) und im zweiten Nachbildungsabschnitt (37) unterschiedlich ist,
insbesondere wobei die gleichartigen Abschnitte an der Bearbeitungskomponente eine Verzahnung (7a; 21) tragen, und der erste Nachbildungsabschnitt (36) einen Kopfkreis der Verzahnung (7a; 21) nachbildet, und der zweite Nachbildungsabschnitt (37) einen Fußkreis der Verzahnung (7a; 21) nachbildet.

17. Verfahren nach einem der vorhergehenden Ansprüche, **dadurch gekennzeichnet, dass** an wenigstens einer Ersatzbearbeitungskomponente (E) wenigstens eine Grenzmarkierung (40) angebracht ist, welche die Grenze einer an der Ersatzbearbeitungskomponente (E) nicht oder nicht vollständig nachgebildeten Struktur der zugehörigen Bearbeitungskomponente (B) anzeigt.

18. Verfahren nach einem der vorhergehenden Ansprüche, **dadurch gekennzeichnet, dass** die Bearbeitungskomponenten (B) wenigstens ein Hilfswerkzeug (27) umfassen, insbesondere wobei das wenigstens eine Hilfswerkzeug (27) eine Gasdüsenanordnung (13; 91) und/oder eine Saugdüsenanordnung und/oder eine KSS-Düsenanordnung und/oder einen Einzentriersensor (28; 93) umfasst.

19. Verfahren zur Vorbereitung eines Bearbeitungsprozesses,
umfassend ein Verfahren zur Kollisionsprüfung nach Anspruch 18,
wobei weiterhin für wenigstens eine Prüfungsposition in der nachgestellten Relativposition eine funktionale Optimierung des wenigstens einen Hilfswerkzeugs (27) erfolgt, insbesondere durch Positionierung, Ausrichtung und/oder Auswahl des Hilfswerkzeugs (27).

20. Werkzeugmaschinensystem (1) ausgebildet zur Durchführung eines Verfahrens nach einem der vorhergehenden Ansprüche, das Werkzeugmaschinensystem (1) umfassend eine Werkzeugmaschine (2) zur Bearbeitung wenigstens eines Werkstücks (20) sowie umfassend eine oder mehrere Ersatzbearbeitungskomponenten (E), die jeweils eine Nachbildung oder partielle Nachbildung einer entsprechenden Bearbeitungskomponente (B) der Werkzeugmaschine (2) sind,
wobei die eine oder die mehreren Ersatzbearbeitungskomponenten (E) ein Ersatzwerkstück (3) umfassen, das eine partielle Nachbildung des Werkstücks (20) ist, wobei im Ersatzwerkstück (3) das Werkstück (20) zumindest über einen axialen Teilbereich (17) lediglich über einen Teil eines Umfangs des Werkstücks (20) nachgebildet ist.

21. Werkzeugmaschinensystem (1) nach Anspruch 20, **dadurch gekennzeichnet, dass** die Werkzeugmaschine (2) eine elektronische Maschinensteuerung (2a) umfasst, die dazu programmiert ist, zur Durchführung des Verfahrens gemäß einem der vorhergehenden Ansprüche zu allen identifizierten Prüfungspositionen zugehörige Prüfungs-Relativpositionen der auf der Werkzeugmaschine (2) angeordneten Ersatzbearbeitungskomponenten (E) und/oder Bearbeitungskomponenten (B) anzusteuern,
insbesondere wobei die Prüfungs-Relativpositionen gleich den Relativpositionen der Bearbeitungskomponenten (B) im prozessspezifischen Zyklus sind oder die Prüfungs-Relativpositionen den Relativpositionen der Bearbeitungskomponenten (B) im prozessspezifischen Zyklus zuzüglich eines Offsets (43) entsprechen, der durch eine Befestigung einer jeweiligen Ersatzbearbeitungskomponente (E) auf der Werkzeugmaschine (2) abweichend von einer Befestigung einer entsprechenden originalen Bearbeitungskomponente (B) bedingt ist.

22. Verwendung einer Ersatzbearbeitungskomponente (E) in einem Verfahren nach einem der Ansprüche 1 bis 19 oder in einem Werkzeugmaschinensystem (1) nach einem der Ansprüche 20 oder 21,
wobei die Ersatzbearbeitungskomponente (E) eine Nachbildung oder partielle Nachbildung einer entsprechenden Bearbeitungskomponente (B) ist, wobei die Ersatzbearbeitungskomponente (E) ein Ersatzwerkstück (3) für ein entsprechendes Werkstück (20) ist, wobei im Ersatzwerkstück (3) das Werkstück (20) zumindest über einen axialen Teilbereich (17) lediglich über einen Teil eines Umfangs des Werkstücks (20) nachgebildet ist.

## Claims

1. A method for collision checking of a machining process,
wherein a process-specific cycle is provided for the machining process, during which cycle multiple machining components (B) are to be moved relative to one another with at least one machine axis (A, X, Y, Z) on a machine tool (2), wherein the machining components (B) comprise at least one workpiece (20) and one tool (7), and at least during a part of the process-specific cycle the workpiece (20) is to rotate about a workpiece axis (WSA) and the tool (7) is to rotate about a tool axis (WZA),
**characterized in that**
in the process-specific cycle, at least one checking position is identified, which checking position is checked for collisions with respect to the machining components (B),
wherein the checking position corresponds to a relative position of the machining components (B) set with the at least one machine axis (A, X, Y, Z),
and **in that**, in order to check a respective checking position for collisions, the relative position of the machining components (B) is reproduced, wherein one or more substitute machining components (E) are used during the reproducing, which are each a replica or partial replica of the corresponding machining component (B),
wherein the one or more substitute machining components (E) comprise a substitute workpiece (3) which is a partial replica of the workpiece (20), wherein in the substitute workpiece (3) the workpiece (20) is replicated at least over an axial partial region (17) only over a part of a circumference of the workpiece (20),
and wherein, in the reproduced relative position, the substitute workpiece (3) is rotated about its workpiece axis (WSA).

2. The method according to claim 1, **characterized in that** the reproducing of the relative position of the machining components (B) is performed on a model (80) of the machine tool (2) separate from the machine tool (2).

3. The method according to claim 1, **characterized in that** the reproducing of the relative positions of the machining components (B) takes place on the machine tool (2),
in particular wherein the machine tool (2) has at least one workpiece spindle (4) with at least one clamping means (11), and the substitute workpiece (3) is mounted with the clamping means (11) for the reproducing.

4. The method according to claim 3, **characterized in that** the substitute workpiece (3) is fastened to an intermediate holder (76) for the reproducing, and the intermediate holder (76) is fastened directly or indirectly to a workpiece spindle (4).

5. The method according to any of claims 3 or 4, **characterized in that** the substitute workpiece (3) is fastened to a workpiece spindle (4) of the machine tool (2) for the reproducing, and for rotating the substitute workpiece (3) about its workpiece axis (WSA) the workpiece spindle (4) of the machine tool (2) is rotated.

6. The method according to any of claims 1 to 4, **characterized in that** the substitute workpiece (3) is mounted on an auxiliary rotary holder (41) for the reproducing, and that for rotating the substitute workpiece (3) this substitute workpiece (3) is rotated on the auxiliary rotary holder (41).

7. The method according to any of claims 1 to 6, **characterized in that** the substitute workpiece (3) only replicates a cross-sectional contour (66) of the workpiece (20) completely or partially.

8. The method according to claim 7, **characterized in that** the substitute workpiece (3) is formed by a two-dimensional template (30).

9. The method according to claim 8, **characterized in**
**that** the two-dimensional template (30) is designed as a multiple template (44) which, at different sections (55, 56) of its edge contour, replicates the cross-sectional contours (66) of different workpieces (20), in each case completely or partially,
or
**that** the two-dimensional template (30) has partial segments (61) which are adjustable relative to one another, which are set in such a way that they completely or partially replicate the cross-sectional contour (66) of the workpiece (20) and/or of a clamping means.

10. The method according to claim 7, **characterized in that** the substitute workpiece completely or partially replicates the cross-sectional contour (66) of the workpiece and/or of a clamping means by light beams (67), in particular laser beams,
in particular wherein the light beams (67) replicate edges of the cross-sectional contour (66) of the workpiece and/or of the clamping means, and/or that intersection points (70) of the light beams (67) replicate corner points in the cross-sectional contour (66) of the workpiece (20) and/or of the clamping means.

11. The method according to any of the preceding claims, **characterized in that** the one or more substitute machining components (E) comprise a substitute tool (14) that is a replica or partial replica of the tool (7).

12. The method according to claim 11, **characterized in that**
the substitute tool (14) is a partial replica of the tool (7), wherein in the substitute tool (14) the tool (7), at least over an axial partial region, is replicated only over a part of a circumference of the tool (7),
and **in that** in the reproduced relative position the substitute tool (14) is rotated about its tool axis (WZA).

13. The method according to claim 11 or 12, **characterized in that** the one or more substitute machining components (E) comprise a substitute tool holder (15) which is a replica or partial replica of a tool holder (12) with which the tool (7) is to be held on a tool spindle (5) of the machine tool (2).

14. The method according to any of the preceding claims, **characterized in that** the one or more substitute machining components (E) comprise a substitute clamping means (29) which is a replica or partial replica of a clamping means (11) with which the workpiece (20) is to be held on a workpiece spindle (4) of the machine tool (2),
in particular wherein the substitute clamping means (29) in the reproduced relative position is rotated together with the substitute workpiece (3),
and in particular wherein the substitute clamping means (29) and the substitute workpiece (3) are formed by a common two-dimensional template (30).

15. The method according to any of the preceding claims, **characterized in that**, in the case of one or more substitute machining components (E), a toothing (7a; 21) of the corresponding machining component (B) is replaced completely or partially by an envelope curve (38, 39; 75) or envelope surface (23, 24) of the toothing (7a; 21).

16. The method according to any of the preceding claims, **characterized in that**
the one or more substitute machining components (E) comprise at least one substitute machining component (E) which has a first replication section (36) and a second replication section (37), wherein these replication sections (36, 37) replicate two similarly formed sections of the corresponding machining component (B), and wherein a type of replication in the first replication section (36) and in the second replication section (37) is different,
in particular wherein the similar sections on the machining component bear a toothing (7a; 21), and the first replication section (36) replicates a tip circle of the toothing (7a; 21), and the second replication section (37) replicates a root circle of the toothing (7a; 21).

17. The method according to of the preceding claims, **characterized in that** at least one boundary marking (40) is applied to at least one substitute machining component (E), said boundary marking indicating the boundary of a structure of the associated machining component (B) that is not, or not completely, replicated on the substitute machining component (E).

18. The method according to any of the preceding claims, **characterized in that** the machining components (B) comprise at least one auxiliary tool (27), in particular wherein the at least one auxiliary tool (27) comprises a gas nozzle arrangement (13; 91) and/or a suction nozzle arrangement and/or a lubricant coolant nozzle arrangement and/or a centering sensor (28; 93).

19. A method for preparing a machining process,
comprising a method for collision checking according to claim 18,
wherein furthermore for at least one checking position in the reproduced relative position a functional optimization of the at least one auxiliary tool (27) takes place, in particular by positioning, aligning and/or selecting the auxiliary tool (27).

20. A machine tool system (1) designed to carry out a method according to any of the preceding claims, the machine tool system (1) comprising a machine tool (2) for machining at least one workpiece (20) and comprising one or more substitute machining components (E), each of which is a replica or partial replica of a corresponding machining component (B) of the machine tool (2),
wherein the one or more substitute machining components (E) comprises a substitute workpiece (3) which is a partial replica of the workpiece (20), wherein in the substitute workpiece (3) the workpiece (20), at least over an axial partial region (17), is replicated only over a part of a circumference of the workpiece (20).

21. A machine tool system (1) according to claim 20, **characterized in that** the machine tool (2) comprises an electronic machine controller (2a) that is programmed, for carrying out the method according to any of the preceding claims, to approach for all identified checking positions associated relative checking positions of the substitute machining components (E) and/or machining components (B) arranged on the machine tool (2),
in particular wherein the relative checking positions are equal to the relative positions of the machining components (B) in the process-specific cycle or the relative checking positions correspond to the relative positions of the machining components (B) in the process-specific cycle plus an offset (43) which is caused by a fastening of a respective substitute machining component (E) on the machine tool (2) differing from a fastening of a corresponding original machining component (B).

22. A use of a substitute machining component (E) in a method according to any one of claims 1 to 19 or in a machine tool system (1) according to any one of claims 20 or 21,
wherein the substitute machining component (E) is a replica or partial replica of a corresponding machining component (B),
wherein the substitute machining component (E) is a substitute workpiece (3) for a corresponding workpiece (20), wherein in the substitute workpiece (3) the workpiece (20), at least over an axial partial region (17), is replicated only over a part of a circumference of the workpiece (20).

## Revendications

1. Procédé de vérification de collision d'un processus d'usinage, dans lequel un cycle spécifique au processus est prévu pour le processus d'usinage, pendant lequel plusieurs composants d'usinage (B) doivent être déplacés relativement les uns aux autres avec au moins un axe de machine (A, X, Y, Z) sur une machine-outil (2), les composants d'usinage (B) comprenant au moins une pièce (20) et un outil (7), et au moins pendant une partie du cycle spécifique au processus, la pièce (20) doit tourner autour d'un axe de pièce (WSA) et l'outil (7) autour d'un axe d'outil (WZA),
**caractérisé en ce que**
dans le cycle spécifique au processus, au moins une position de vérification est identifiée, laquelle est vérifiée pour des collisions par rapport aux composants d'usinage (B),
la position de vérification correspondant à une position relative des composants d'usinage (B) réglée avec le ou les axes de machine (A, X, Y, Z),
et **en ce que**, pour vérifier une position de vérification respective pour des collisions, la position relative des composants d'usinage (B) est ajustée, lors de l'ajustement, un ou plusieurs composants d'usinage de remplacement (E) étant utilisés, chacun étant une reproduction ou une reproduction partielle du composant d'usinage (B) correspondant,
le ou les composants d'usinage de remplacement (E) comprenant une pièce de remplacement (3), qui est une reproduction partielle de la pièce (20), la pièce (20) étant reproduite dans la pièce de remplacement (3) au moins sur une section axiale partielle (17) uniquement sur une partie d'une circonférence de la pièce (20), et dans la position relative ajustée, la pièce de remplacement (3) étant tournée autour de son axe de pièce (WSA).

2. Procédé selon la revendication 1, **caractérisé en ce que** l'ajustement de la position relative des composants d'usinage (B) est effectué sur un modèle (80) de la machine-outil (2) séparé de la machine-outil (2).

3. Procédé selon la revendication 1, **caractérisé en ce que** l'ajustement des positions relatives des composants d'usinage (B) est effectué sur la machine-outil (2), en particulier la machine-outil (2) comportant au moins une broche de pièce (4) avec au moins un moyen de serrage (11), et la pièce de remplacement (3) étant montée avec le moyen de serrage (11) pour l'ajustement.

4. Procédé selon la revendication 3, **caractérisé en ce que**, pour l'ajustement, la pièce de remplacement (3) est fixée à un support intermédiaire (76), et le support intermédiaire (76) est fixé directement ou indirectement à une broche de pièce (4).

5. Procédé selon l'une des revendications 3 ou 4, **caractérisé en ce que**, pour l'ajustement, la pièce de remplacement (3) est fixée à une broche de pièce (4) de la machine-outil (2), et pour faire tourner la pièce de remplacement (3) autour de son axe de pièce (WSA), la broche de pièce (4) de la machine-outil (2) est tournée.

6. Procédé selon l'une des revendications 1 à 4, **caractérisé en ce que**, pour l'ajustement, la pièce de remplacement (3) est montée sur un support de rotation provisoire (41), et pour faire tourner la pièce de remplacement (3), celle-ci est tournée sur le support de rotation provisoire (41).

7. Procédé selon l'une des revendications 1 à 6, **caractérisé en ce que** la pièce de remplacement (3) ne reproduit de la pièce (20) qu'un contour de section transversale (66) en tout ou en partie.

8. Procédé selon la revendication 7, **caractérisé en ce que** la pièce de remplacement (3) est formée par un gabarit bidimensionnel (30).

9. Procédé selon la revendication 8, **caractérisé en ce que** le gabarit bidimensionnel (30) est formé comme un gabarit multiple (44), qui reproduit en tout ou en partie, sur différentes sections (55, 56) de son contour périphérique, les contours de section transversale (66) de différentes pièces (20), ou **en ce que** le gabarit bidimensionnel (30) comporte des segments partiels (61) réglables les uns par rapport aux autres, lesquels sont réglés de sorte à reproduire en tout ou en partie le contour de section transversale (66) de la pièce (20) et/ou d'un moyen de serrage.

10. Procédé selon la revendication 7, **caractérisé en ce que** la pièce de remplacement reproduit en tout ou en partie le contour de section transversale (66) de la pièce et/ou d'un moyen de serrage par des faisceaux lumineux (67), en particulier des faisceaux laser, en particulier les faisceaux lumineux (67) reproduisant des arêtes du contour de section transversale (66) de la pièce et/ou du moyen de serrage et/ou **en ce que** des points d'intersection (70) des faisceaux lumineux (67) reproduisent des sommets dans le contour de section transversale (66) de la pièce (20) et/ou du moyen de serrage.

11. Procédé selon l'une des revendications précédentes, **caractérisé en ce que** le ou les composants d'usinage de remplacement (E) comprennent un outil de remplacement (14), qui est une reproduction ou une reproduction partielle de l'outil (7).

12. Procédé selon la revendication 11, **caractérisé en ce que** l'outil de remplacement (14) est une reproduction partielle de l'outil (7), l'outil (7) étant reproduit dans l'outil de remplacement (14) au moins sur une section axiale partielle uniquement sur une partie d'une circonférence de l'outil (7), et dans la position relative ajustée, l'outil de remplacement (14) étant tourné autour de son axe d'outil (WZA).

13. Procédé selon la revendication 11 ou 12, **caractérisé en ce que** le ou les composants d'usinage de remplacement (E) comprennent un porte-outil de remplacement (15), qui est une reproduction ou une reproduction partielle d'un porte-outil (12), avec lequel l'outil (7) doit être maintenu sur une broche d'outil (5) de la machine-outil (2).

14. Procédé selon l'une des revendications précédentes, **caractérisé en ce que** le ou les composants d'usinage de remplacement (E) comprennent un moyen de serrage de remplacement (29), qui est une reproduction ou une reproduction partielle d'un moyen de serrage (11), avec lequel la pièce (20) doit être maintenue sur une broche de pièce (4) de la machine-outil (2), en particulier le moyen de serrage de remplacement (29) étant tourné dans la position relative ajustée avec la pièce de remplacement (3), et en particulier le moyen de serrage de remplacement (29) et la pièce de remplacement (3) étant formés par un gabarit bidimensionnel commun (30).

15. Procédé selon l'une des revendications précédentes, **caractérisé en ce que**, pour un ou plusieurs composants d'usinage de remplacement (E), une denture (7a ; 21) du composant d'usinage (B) correspondant est remplacée en tout ou en partie par une enveloppe (38, 39 ; 75) ou une surface enveloppe (23, 24) de la denture (7a ; 21).

16. Procédé selon l'une des revendications précédentes, **caractérisé en ce que** le ou les composants d'usinage de remplacement (E) comprennent au moins un composant d'usinage de remplacement (E) qui comporte une première section de reproduction (36) et une seconde section de reproduction (37), ces sections de reproduction (36, 37) reproduisant deux sections formées de manière similaire du composant d'usinage (B) correspondant, et une nature de la reproduction dans la première section de reproduction (36) et dans la seconde section de reproduction (37) étant différente, en particulier les sections similaires du composant d'usinage portant une denture (7a ; 21), et la première section de reproduction (36) reproduisant un cercle de tête de la denture (7a ; 21), et la seconde section de reproduction (37) reproduisant un cercle de pied de la denture (7a ; 21).

17. Procédé selon l'une des revendications précédentes, **caractérisé en ce qu'**au moins un composant d'usinage de remplacement (E) comporte au moins un marqueur de limite (40), lequel indique la limite d'une structure de la composant d'usinage (B) associée qui n'est pas ou n'est pas entièrement reproduite sur le composant d'usinage de remplacement (E).

18. Procédé selon l'une des revendications précédentes, **caractérisé en ce que** les composants d'usinage (B) comprennent au moins un outil auxiliaire (27), en particulier le ou les outils auxiliaires (27) comprenant un dispositif de buse à gaz (13 ; 91) et/ou un dispositif de buse d'aspiration et/ou un dispositif de buse de lubrification-réfrigération et/ou un capteur de centrage (28 ; 93).

19. Procédé de préparation d'un processus d'usinage, comprenant un procédé de vérification de collision selon la revendication 18, dans lequel, en outre, pour au moins une position de vérification dans la position relative ajustée, une optimisation fonctionnelle du ou des outils auxiliaires (27) est effectuée, en particulier par positionnement, orientation et/ou sélection de l'outil auxiliaire (27).

20. Système de machine-outil (1) conçu pour la mise en œuvre d'un procédé selon l'une des revendications précédentes, le système de machine-outil (1) comprenant une machine-outil (2) pour l'usinage d'au moins une pièce (20) ainsi qu'un ou plusieurs composants d'usinage de remplacement (E), chacun étant une reproduction ou une reproduction partielle d'un composant d'usinage (B) correspondant de la machine-outil (2), le ou les composants d'usinage de remplacement (E) comprenant une pièce de remplacement (3), qui est une reproduction partielle de la pièce (20), la pièce (20) étant reproduite dans la pièce de remplacement (3) au moins sur une section axiale partielle (17) uniquement sur une partie d'une circonférence de la pièce (20).

21. Système de machine-outil (1) selon la revendication 20, **caractérisé en ce que** la machine-outil (2) comprend une commande électronique de machine (2a), laquelle est programmée pour piloter, pour la mise en œuvre du procédé selon l'une des revendications précédentes, toutes les positions relatives de vérification associées aux positions de vérification identifiées des composants d'usinage de remplacement (E) et/ou des composants d'usinage (B) disposés sur la machine-outil (2), en particulier les positions relatives de vérification étant égales aux positions relatives des composants d'usinage (B) dans le cycle spécifique au processus ou les positions relatives de vérification correspondant aux positions relatives des composants d'usinage (B) dans le cycle spécifique au processus, augmentées d'un décalage (43) qui résulte d'une fixation d'un composant d'usinage de remplacement (E) respectif sur la machine-outil (2) différente d'une fixation d'un composant d'usinage (B) original correspondant.

22. Utilisation d'un composant d'usinage de remplacement (E) dans un procédé selon l'une des revendications 1 à 19 ou dans un système de machine-outil (1) selon l'une des revendications 20 ou 21, le composant d'usinage de remplacement (E) étant une reproduction ou une reproduction partielle d'un composant d'usinage (B) correspondant, le composant d'usinage de remplacement (E) étant une pièce de remplacement (3) pour une pièce (20) correspondante, la pièce (20) étant reproduite dans la pièce de remplacement (3) au moins sur une section axiale partielle (17) uniquement sur une partie d'une circonférence de la pièce (20).
